# EUROPEAN PATENT SPECIFICATION

(11) **EP 2 430 829 B1**
(45) Date of publication and mention of the grant of the patent: **02.07.2014**
(21) Application number: 10722225.9
(22) Date of filing: 10.05.2010
(51) Int. Cl.: G06F 3/0481, G06F 3/0482, H04N 21/431, H04N 21/442, H04N 21/443, G06F 3/023, H04N 5/445, H04N 21/45, H04N 21/466, H04N 21/482, G06F 3/0488

(54) **SYSTEMS AND METHODS FOR ALPHANUMERIC NAVIGATION AND INPUT**
SYSTEME UND VERFAHREN FÜR ALPHANUMERISCHE NAVIGATION UND EINGABE
SYSTÈMES ET PROCÉDÉS DE NAVIGATION ET D'ENTRÉE ALPHANUMÉRIQUES

(30) Priority: 24.09.2009 US 566328; 15.05.2009 US 466585
(43) Date of publication of application: 21.03.2012
(73) Proprietor: United Video Properties, Inc., Santa Clara, CA 95050 (US)
(72) Inventor: PETERSON, Brian, Craig, Barrington, IL 60010 (US)
(74) Representative: Korenberg, Alexander Tal
(86) International application number: PCT/US2010/034207
(87) International publication number: WO 2010/132343

(56) References cited:
- WO-A1-03/036455
- US-A- 5 574 482
- US-A1- 2007 216 659
- IGOR SCHADLE ED - KLAUS MIESENBERGER ET AL: "Sibyl: AAC System Using NLP Techniques" 29 June 2004 (2004-06-29), COMPUTER HELPING PEOPLE WITH SPECIAL NEEDS; [LECTURE NOTES IN COMPUTER SCIENCE;;LNCS], SPRINGER-VERLAG, BERLIN/HEIDELBERG, PAGE(S) 1009 - 1015 , XP019008189 ISBN: 978-3-540-22334-4 the whole document
- Poika Isokoski: "Performance of menu-augmented soft keyboards", Proceedings of the 2004 conference on Human factors in computing systems , CHI '04, 1 January 2004 (2004-01-01), pages 423-430, XP055097947, New York, New York, USA DOI: 10.1145/985692.985746 ISBN: 978-1-58-113702-6

## Description

### Background of the Invention

This invention relates generally to media systems, and more particularly, to media systems that support enhanced navigation or user input.

An interactive media guidance application allows a user to more easily navigate through a wide variety of media content accessible by the user equipment. The accessible media content may include hundreds of digital broadcast television channels, interactive applications (e.g., interactive games), digital music, on-demand programming (e.g., video on-demand (VOD) programming), Internet resources, and recorded content (e.g., content recorded to a local video recorder).

An interactive media guidance application may also perform many media guidance application functions. These media guidance application functions may include searching for media content, scheduling content to be recorded, recording content to a local storage device or remote media server, adding content to a favorite programs list, setting a reminder, ordering content via an on-demand (e.g., VOD) or pay-per-view (PPV) service, or any other suitable function. For example, a user may input the first few letters of a broadcast television series in order to record a single episode, all new episodes, or all new and re-run episodes using a season pass recording function.

Some media guidance application functions require at least some alphanumeric input from the user. For example, a media content search may require the first few letters of the content title to perform the search. As another example, a series recording may require an identification of the series through either a selection in a title listing or schedule grid or through some alphanumeric input from the user. As yet another example, some parental control access code prompts and user authentication or user logon prompts also require some alphanumeric input from the user.

Due to inconsistencies across user input devices, some media guidance applications (and their supporting functions) are generally designed to use a visual alphanumeric keypad for most alphanumeric input. The directional arrows on the user input device may be used to navigate a cursor to the desired alphanumeric character in the visual keypad, and an enter, OK, or select button may be used to select the alphanumeric character for input. The alphanumeric character may then be displayed so that some string (e.g., a word, title, name, PIN, or password) may be formed.

Traditional visual keypads can be an inefficient way to receive user input. For example, a user generally must navigate an on-screen cursor to each letter in the input string and press an enter, OK, or select button to input each character. To edit the input string (e.g., to delete a single character or clear the entire input string), the user then typically must navigate the cursor to an on-screen function button in a fixed area of the screen. This process can result in very slow and clunky user string input.

WO 03/036455 A1 discloses a multi-functional switch device used with electronic equipment for adjusting functions in a vehicle, for example, seat, mirrors, windows, speed, ventilation, lights etc.

US 2007/0216659 A1 discloses an input method for a mobile communication apparatus comprising a processor and a touch sensitive display. A touch keypad comprising a set of keys is displayed, an object over one key of the set of keys is detected, and upon detection of the object, a first subset of keys adjacent to the one key is displayed.

IGOR SCHADLE ED - KLAUS MIESENBERGER ET AL: "Sibyl: ACC System using NLP Techniques", 29 June 2004 (2004-06-29), COMPUTER HELPING PEOPLE WITH SPECIAL NEEDS; [LECTURE NOTES IN COMPUTER SCIENCE;;LNCS], SPRINGER-VERLAG, BERLIN/HEIDELBERG, PAGE(S) 1009-1015 XP019008189, ISBN: 978-3-540-22334-4 discloses an augmentative and alternative communication computer system that aims to improve text typing for persons with severe speech and motor impairments.

US 5,574,482 discloses a method of input programmed to operate on a representation of a keyboard appearing on a touch-sensitive screen in which letters are made temporarily available to the user based on studies of frequency of occurrence and sequence in the language that may then be selected for input by a sliding motion of an input device.

Poika Isokoski: "Performance of menu-augmented soft keyboards", Proceedings of the 2004 conference on Human factors in computing systems , CHI '04, 1 January 2004 (2004-01-01), pages 423-430, XP055097947, New York, New York, USA, DOI: 10.1145/985692.985746, ISBN: 978-1-58-113702-6 discloses a stylus-based text entry system, where a popup menu is added to a regular soft-keyboard to increase text entry speed.

### Summary of the Invention

In view of the foregoing, systems and methods for improved alphanumeric navigation and input are provided. A floating pane of an on-screen keypad is provided with at least one non-alphanumeric key. For example, the non-alphanumeric key may include a key to insert a space, a key to delete a single letter, a key to clear an entire input string, a key to access additional symbols or characters (e.g., punctuation marks), or any other non-alphanumeric key in a visual keypad.

In some embodiments, the floating pane may be repositioned (e.g., rotated or orbited) around the perimeter of a standard visual keypad so that the pane is always in the closest position to the current cursor location. The closest position may be determined by comparing the number of cursor positions away from the current cursor position to the floating pane and selecting the position that minimizes this number. In other embodiments, some or all of the floating pane may be redisplayed inside the standard keypad block (e.g., the standard A-Z letter block) so that the pane is always adjacent to the current cursor position.

The floating pane may be combined with one or more enhanced user input features, such as automatic string completion, automatic next character selection, and automatic character removal. To support automatic string completion, media guidance application data (e.g., schedule information from a program schedule database) may be indexed and used to form a list or tree of candidate resultant strings. Information from other sources may also be used to form the list or tree of candidate resultant strings. For example, if the user is searching for a program title, all valid program titles currently accessible by the user equipment (e.g., program titles appearing in the program schedule database, program titles accessible on-demand or via a per-per-view service, and program titles recorded to a local or network recording device) may been indexed in a table or relational database. As the user inputs characters of the program title, candidate resultant strings that do not match the user's input may be removed or pruned from the list or tree. When only a single candidate resultant string remains in the list or tree, this string may be used to automatically complete the user input. The candidate resultant strings remaining in the list or tree may also be displayed simultaneously with the input interface in an interactive list, so that a list of valid strings is readily accessible to the user.

In some embodiments, candidate strings are ranked using user profile information. For example, the user's most frequently watched channels, programs, and genres may be monitored by the media guidance application and saved to a user profile. Candidate strings with a low likelihood of being the actual string being inputted by the user (based, for example, at least in part on the user monitoring and user profile information) may be removed from the automatic string completion list or tree.

Automatic next character selection may also be supported in some embodiments. A frequency analysis engine may output the frequencies of all possible letter combinations in an input string. Bigram tables (or more generally n-gram tables) may also be stored on the user equipment device. Bigrams and other common multiple-letter combinations may be automatically completed when the likelihood of a correct completion exceeds some threshold likelihood value. The likelihood of a correct completion may additionally be determined based at least in part on the strings still remaining in the list or tree of candidate resultant strings. In some embodiments, the cursor position may be automatically moved to the most likely next character in the string without automatically selecting the next character. The user may then decide whether or not to input the character identified by the automatic cursor movement.

To support automatic character removal, characters that cannot possibly be the next user input selection may be grayed out or disabled in the visual keypad. In some embodiments, the grayed out or disabled keys are actually removed from the visual keypad display. The remaining keys in the keypad may then be redisplayed in a condensed form by shifting the remaining keys to new locations in the keypad while maintaining the alphabet sequence.

### Brief Description of the Drawings

The above and other objects and advantages of the invention will be apparent upon consideration of the following detailed description, taken in conjunction with the accompanying drawings, in which like reference characters refer to like parts throughout, and in which:
FIGS. 1 and 2 show illustrative display screens that may be used to provide media guidance application listings in accordance with one embodiment of the invention;
FIG. 3 shows an illustrative user equipment device in accordance with one embodiment of the invention;
FIG. 4 is a simplified diagram of an illustrative interactive media system in accordance with one embodiment of the invention;
FIGS. 5A-5Q show illustrative visual keypads in accordance with embodiments of the invention;
FIG. 6 shows another illustrative visual keypad in accordance with one embodiment of the invention;
FIG. 7 shows an illustrative visual keypad with at least one disabled key in accordance with one embodiment of the invention;
FIG. 8 shows an illustrative condensed visual keypad with disabled keys removed in accordance with one embodiment of the invention;
FIG. 9 shows the illustrative condensed keypad of FIG. 8 simultaneously displayed with a candidate result string listing by category in accordance with one embodiment of the invention;
FIG. 10 shows an illustrative visual keypad with automatic next character cursor movement in accordance with one embodiment of the invention; and
FIGS. 11 and 12 show illustrative processes for supporting enhanced visual keypads in accordance with various embodiments of the invention.

### Detailed Description of Embodiments

The amount of media available to users in any given media delivery system can be substantial. Consequently, many users desire a form of media guidance through an interface that allows users to efficiently navigate through media selections and easily identify media content that they may desire. An application which provides such guidance is referred to herein as an interactive media guidance application or, sometimes, a media guidance application or a guidance application.

Although interactive media guidance applications facilitate navigation and search through available media content accessible by a user equipment, users are still sometimes required to input letters, numbers, or both letters and numbers (collectively herein referred to as alphanumeric, even though only letters or only numbers may be inputted) to perform some media guidance application functions.

To support alphanumeric input, visual keypads may be provided. The visual keypads may include one or more enhancements designed to make alphanumeric input more efficient and less cumbersome. The visual keypads may be presented to the user by an interactive media guidance application. The application may take various forms depending on the media for which it provides guidance. One typical type of media guidance application is an interactive television program guide. Interactive television program guides (sometimes referred to as electronic program guides) are well-known guidance applications that, among other things, allow users to navigate among and locate many types of media content, including conventional television programming (provided via traditional broadcast, cable, satellite, Internet, or other means), as well as pay-per-view programs, on-demand programs (as in video-on-demand (VOD) systems), Internet content (e.g., streaming media, downloadable media, Webcasts, etc.), recorded programs, and other types of media or video content. Guidance applications also allow users to navigate among and locate content related to the video content, including, for example, video clips, articles, advertisements, chat sessions, games, etc. Guidance applications also allow users to navigate among and locate multimedia content. The term multimedia is defined herein as media and content that utilizes at least two different content forms, such as text, audio, still images, animation, video, and interactivity content forms. Multimedia content may be recorded and played, displayed or accessed by information content processing devices, such as computerized and electronic devices, but can also be part of a live performance. It should be understood that the invention embodiments that are described in relation to media or media content are also applicable to other types of content, such as video, audio and/or multimedia.

With the advent of the Internet, mobile computing, and high-speed wireless networks, users are accessing media on personal computers (PCs) and other devices on which they traditionally did not, such as hand-held computers, personal digital assistants (PDAs), mobile telephones, or other mobile devices. On these devices users are able to navigate among and locate the same media available through a television. Consequently, media guidance is necessary on these devices, as well. The guidance provided may be for media content available only through a television, for media content available only through one or more of these devices, or for media content available both through a television and one or more of these devices. The media guidance applications may be provided as online applications (i.e., provided on a web-site), or as stand-alone applications or clients on hand-held computers, PDAs, mobile telephones, or other mobile devices. The various devices and platforms that may implement media guidance applications are described in more detail below.

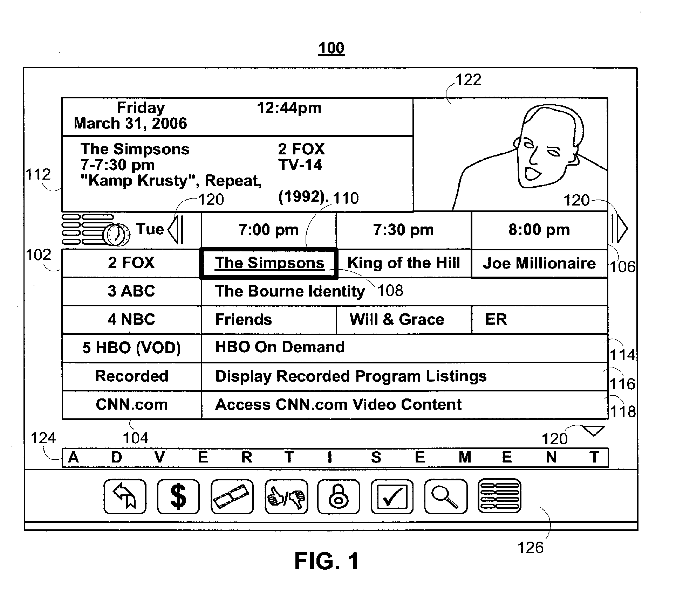

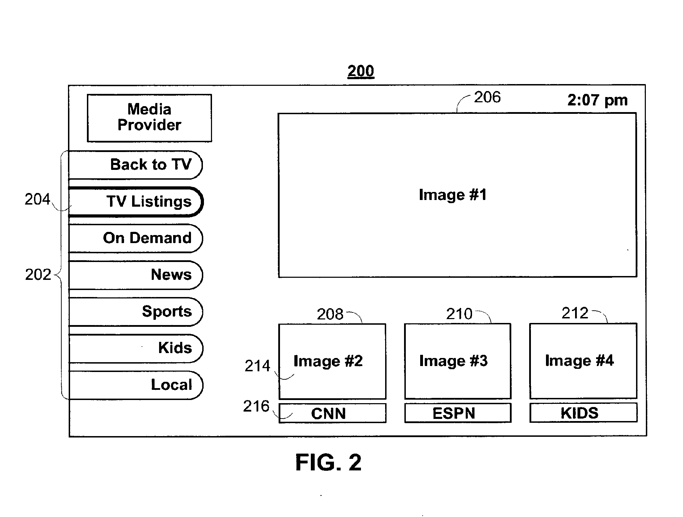

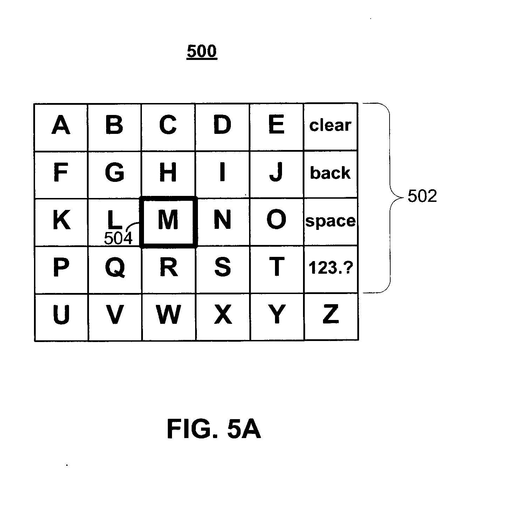

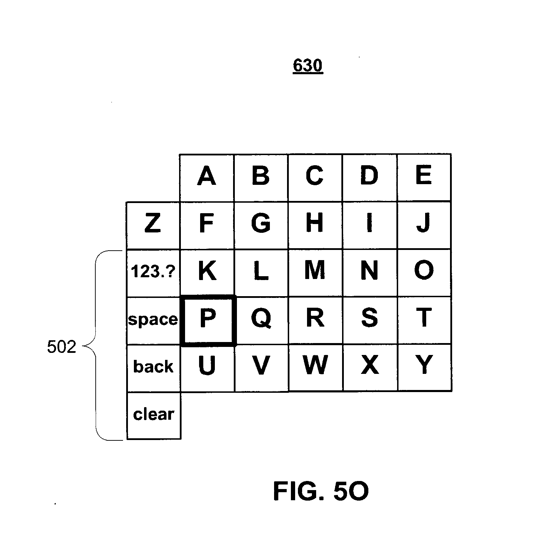

One of the functions of the media guidance application is to provide media listings and media information to users. FIGS. 1 and 2 show illustrative display screens that may be used to provide media guidance, and in particular media listings. The display screens shown in FIGS. 1 and 2 may be implemented on any suitable device or platform. While the displays of FIGS. 1 and 2 are illustrated as full screen displays, they may also be fully or partially overlaid over media content being displayed. A user may indicate a desire to access media information by selecting a selectable option provided in a display screen (e.g., a menu option, a listings option, an icon, a hyperlink, etc.) or pressing a dedicated button (e.g., a GUIDE button) on a remote control or other user input interface or device. In response to the user's indication, the media guidance application may provide a display screen with media information organized in one of several ways, such as by time and channel in a grid, by time, by channel, by media type, by category (e.g., movies, sports, news, children, or other categories of programming), or other predefined, user-defined, or other organization criteria. The visual keypads shown in FIGS. 5A-5Q and 6-10 may be displayed within any media guidance application display.

FIG. 1 shows illustrative grid program listings display 100 arranged by time and channel that also enables access to different types of media content in a single display. Display 100 may include grid 102 with: (1) a column of channel/media type identifiers 104, where each channel/media type identifier (which is a cell in the column) identifies a different channel or media type available; and (2) a row of time identifiers 106, where each time identifier (which is a cell in the row) identifies a time block of programming. Grid 102 also includes cells of program listings, such as program listing 108, where each listing provides the title of the program provided on the listing's associated channel and time. With a user input device, a user can select program listings by moving highlight region 110. Information relating to the program listing selected by highlight region 110 may be provided in program information region 112. Region 112 may include, for example, the program title, the program description, the time the program is provided (if applicable), the channel the program is on (if applicable), the program's rating, and other desired information.

In addition to providing access to linear programming provided according to a schedule, the media guidance application also provides access to non-linear programming which is not provided according to a schedule. Non-linear programming may include content from different media sources including on-demand media content (e.g., VOD), Internet content (e.g., streaming media, downloadable media, etc.), locally stored media content (e.g., video content stored on a digital video recorder (DVR), digital video disc (DVD), video cassette, compact disc (CD), etc.), or other time-insensitive media content. On-demand content may include both movies and original media content provided by a particular media provider (e.g., HBO On Demand providing "The Sopranos" and "Curb Your Enthusiasm"). HBO ON DEMAND is a service mark owned by Time Warner Company L.P. et al. and THE SOPRANOS and CURB YOUR ENTHUSIASM are trademarks owned by the Home Box Office, Inc. Internet content may include web events, such as a chat session or Webcast, or content available on-demand as streaming media or downloadable media through an Internet web site or other Internet access (e.g. FTP).

Grid 102 may provide listings for non-linear programming including on-demand listing 114, recorded media listing 116, and Internet content listing 118. A display combining listings for content from different types of media sources is sometimes referred to as a "mixed-media" display. The various permutations of the types of listings that may be displayed that are different than display 100 may be based on user selection or guidance application definition (e.g., a display of only recorded and broadcast listings, only on-demand and broadcast listings, etc.). As illustrated, listings 114, 116, and 118 are shown as spanning the entire time block displayed in grid 102 to indicate that selection of these listings may provide access to a display dedicated to on-demand listings, recorded listings, or Internet listings, respectively. In other embodiments, listings for these media types may be included directly in grid 102. Additional listings may be displayed in response to the user selecting one of the navigational icons 120. (Pressing an arrow key on a user input device may affect the display in a similar manner as selecting navigational icons 120.)

Display 100 may also include video region 122, advertisement 124, and options region 126. Video region 122 may allow the user to view and/or preview programs that are currently available, will be available, or were available to the user. The content of video region 122 may correspond to, or be independent from, one of the listings displayed in grid 102. Grid displays including a video region are sometimes referred to as picture-in-guide (PIG) displays. PIG displays and their functionalities are described in greater detail in Satterfield et al. U.S. Patent No. 6,564,378, issued May 13, 2003 and Yuen et al. U.S. Patent No. 6,239,794, issued May 29, 2001, which are hereby incorporated by reference herein in their entireties. PIG displays may be included in other media guidance application display screens of the present invention.

Advertisement 124 may provide an advertisement for media content that, depending on a viewer's access rights (e.g., for subscription programming), is currently available for viewing, will be available for viewing in the future, or may never become available for viewing, and may correspond to or be unrelated to one or more of the media listings in grid 102. Advertisement 124 may also be for products or services related or unrelated to the media content displayed in grid 102. Advertisement 124 may be selectable and provide further information about media content, provide information about a product or a service, enable purchasing of media content, a product, or a service, provide media content relating to the advertisement, etc. Advertisement 124 may be targeted based on a user's profile/preferences, monitored user activity, the type of display provided, or on other suitable targeted advertisement bases.

While advertisement 124 is shown as rectangular or banner shaped, advertisements may be provided in any suitable size, shape, and location in a guidance application display. For example, advertisement 124 may be provided as a rectangular shape that is horizontally adjacent to grid 102. This is sometimes referred to as a panel advertisement. In addition, advertisements may be overlaid over media content or a guidance application display or embedded within a display. Advertisements may also include text, images, rotating images, video clips, or other types of media content. Advertisements may be stored in the user equipment with the guidance application, in a database connected to the user equipment, in a remote location (including streaming media servers), or on other storage means or a combination of these locations. Providing advertisements in a media guidance application is discussed in greater detail in, for example, Knudson et al., U.S. Patent Application No. 10/347,673, filed January 17, 2003, Ward, III et al. U.S. Patent No. 6,756,997, issued June 29, 2004, and Schein et al. U.S. Patent No. 6,388,714, issued May 14, 2002, which are hereby incorporated by reference herein in their entireties. It will be appreciated that advertisements may be included in other media guidance application display screens of the present invention.

Options region 126 may allow the user to access different types of media content, media guidance application displays, and/or media guidance application features. Options region 126 may be part of display 100 (and other display screens of the present invention), or may be invoked by a user by selecting an on-screen option or pressing a dedicated or assignable button on a user input device. The selectable options within options region 126 may concern features related to program listings in grid 102 or may include options available from a main menu display. Features related to program listings may include searching for other air times or ways of receiving a program, recording a program, enabling series recording of a program, setting program and/or channel as a favorite, purchasing a program, or other features. Options available from a main menu display may include search options, VOD options, parental control options, access to various types of listing displays, subscribe to a premium service, edit a user's profile, access a browse overlay, or other options.

The media guidance application may be personalized based on a user's preferences. A personalized media guidance application allows a user to customize displays and features to create a personalized "experience" with the media guidance application. This personalized experience may be created by allowing a user to input these customizations and/or by the media guidance application monitoring user activity to determine various user preferences. Users may access their personalized guidance application by logging in or otherwise identifying themselves to the guidance application. Customization of the media guidance application may be made in accordance with a user profile. The customizations may include varying presentation schemes (e.g., color scheme of displays, font size of text, etc.), aspects of media content listings displayed (e.g., only HDTV programming, user-specified broadcast channels based on favorite channel selections, re-ordering the display of channels, recommended media content, etc.), desired recording features (e.g., recording or series recordings for particular users, recording quality, etc.), parental control settings, and other desired customizations.

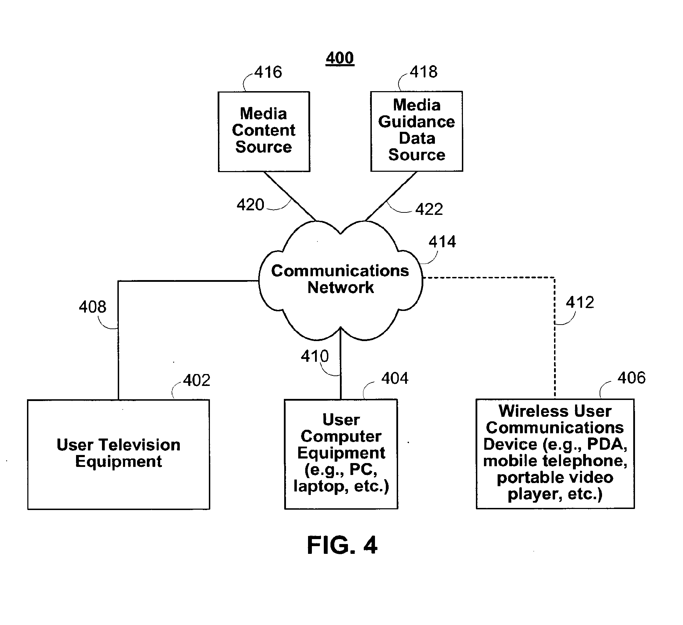

The media guidance application may allow a user to provide user profile information or may automatically compile user profile information. The media guidance application may, for example, monitor the media the user accesses and/or other interactions the user may have with the guidance application. Additionally, the media guidance application may obtain all or part of other user profiles that are related to a particular user (e.g., from other web sites on the Internet the user accesses, such as www.tvguide.com, from other media guidance applications the user accesses, from other interactive applications the user accesses, from a handheld device of the user, etc.), and/or obtain information about the user from other sources that the media guidance application may access. As a result, a user can be provided with a unified guidance application experience across the user's different devices. This type of user experience is described in greater detail below in connection with FIG. 4. Additional personalized media guidance application features are described in greater detail in Ellis et al., U.S. Patent Application No. 11/179,410, filed July 11, 2005, Boyer et al., U.S. Patent Application No. 09/437,304, filed November 9, 1999, and Ellis et al., U.S. Patent Application No. 10/105,128, filed February 21, 2002, which are hereby incorporated by reference herein in their entireties.

Another display arrangement for providing media guidance is shown in FIG. 2. Video mosaic display 200 includes selectable options 202 for media content information organized based on media type, genre, and/or other organization criteria. In display 200, television listings option 204 is selected, thus providing listings 206, 208, 210, and 212 as broadcast program listings. Unlike the listings from FIG. 1, the listings in display 200 are not limited to simple text (e.g., the program title) and icons to describe media. Rather, in display 200 the listings may provide graphical images including cover art, still images from the media content, video clip previews, live video from the media content, or other types of media that indicate to a user the media content being described by the listing. Each of the graphical listings may also be accompanied by text to provide further information about the media content associated with the listing. For example, listing 208 may include more than one portion, including media portion 214 and text portion 216. Media portion 214 and/or text portion 216 may be selectable to view video in full-screen or to view program listings related to the video displayed in media portion 214 (e.g., to view listings for the channel that the video is displayed on).

The listings in display 200 are of different sizes (i.e., listing 206 is larger than listings 208, 210, and 212), but if desired, all the listings may be the same size. Listings may be of different sizes or graphically accentuated to indicate degrees of interest to the user or to emphasize certain content, as desired by the media provider or based on user preferences. Various systems and methods for graphically accentuating media listings are discussed in, for example, Yates, U.S. Patent Application No. 11/324,202, filed December 29, 2005, which is hereby incorporated by reference herein in its entirety.

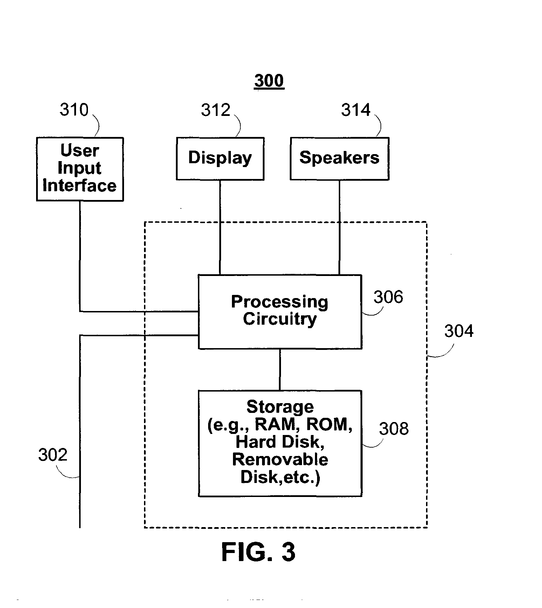

Users may access media content and the media guidance application (and its display screens described above and below) from one or more of their user equipment devices. FIG. 3 shows a generalized embodiment of illustrative user equipment device 300. More specific implementations of user equipment devices are discussed below in connection with FIG. 4. User equipment device 300 may receive media content and data via input/output (hereinafter "I/O") path 302. I/O path 302 may provide media content (e.g., broadcast programming, on-demand programming, Internet content, and other video or audio) and data to control circuitry 304, which includes processing circuitry 306 and storage 308. Control circuitry 304 may be used to send and receive commands, requests, and other suitable data using I/O path 302. I/O path 302 may connect control circuitry 304 (and specifically processing circuitry 306) to one or more communications paths (described below). I/O functions may be provided by one or more of these communications paths, but are shown as a single path in FIG. 3 to avoid overcomplicating the drawing.

Control circuitry 304 may be based on any suitable processing circuitry 306 such as processing circuitry based on one or more microprocessors, microcontrollers, digital signal processors, programmable logic devices, etc. In some embodiments, control circuitry 304 executes instructions for a media guidance application stored in memory (i.e., storage 308). In client-server based embodiments, control circuitry 304 may include communications circuitry suitable for communicating with a guidance application server or other networks or servers. Communications circuitry may include a cable modem, an integrated services digital network (ISDN) modem, a digital subscriber line (DSL) modem, a telephone modem, or a wireless modem for communications with other equipment. Such communications may involve the Internet or any other suitable communications networks or paths (which is described in more detail in connection with FIG. 4). In addition, communications circuitry may include circuitry that enables peer-to-peer communication of user equipment devices, or communication of user equipment devices in locations remote from each other (described in more detail below).

Memory (e.g., random-access memory, read-only memory, or any other suitable memory), hard drives, optical drives, or any other suitable fixed or removable storage devices (e.g., DVD recorder, CD recorder, video cassette recorder, or other suitable recording device) may be provided as storage 308 that is part of control circuitry 304. Storage 308 may include one or more of the above types of storage devices. For example, user equipment device 300 may include a hard drive for a DVR (sometimes called a personal video recorder, or PVR) and a DVD recorder as a secondary storage device. Storage 308 may be used to store various types of media described herein and guidance application data, including program information, guidance application settings, user preferences or profile information, or other data used in operating the guidance application. Nonvolatile memory may also be used (e.g., to launch a boot-up routine and other instructions).

Control circuitry 304 may include video generating circuitry and tuning circuitry, such as one or more analog tuners, one or more MPEG-2 decoders or other digital decoding circuitry, high-definition tuners, or any other suitable tuning or video circuits or combinations of such circuits. Encoding circuitry (e.g., for converting over-the-air, analog, or digital signals to MPEG signals for storage) may also be provided. Control circuitry 304 may also include scaler circuitry for upconverting and downconverting media into the preferred output format of the user equipment 300. Circuitry 304 may also include digital-to-analog converter circuitry and analog-to-digital converter circuitry for converting between digital and analog signals. The tuning and encoding circuitry may be used by the user equipment to receive and to display, to play, or to record media content. The tuning and encoding circuitry may also be used to receive guidance data. The circuitry described herein, including for example, the tuning, video generating, encoding, decoding, scaler, and analog/digital circuitry, may be implemented using software running on one or more general purpose or specialized processors. Multiple tuners may be provided to handle simultaneous tuning functions (e.g., watch and record functions, picture-in-picture (PIP) functions, multiple-tuner recording, etc.). If storage 308 is provided as a separate device from user equipment 300, the tuning and encoding circuitry (including multiple tuners) may be associated with storage 308.

A user may control the control circuitry 304 using user input interface 310. User input interface 310 may be any suitable user interface, such as a remote control, mouse, trackball, keypad, keyboard, touch screen, touch pad, stylus input, joystick, voice recognition interface, or other user input interfaces. Display 312 may be provided as a stand-alone device or integrated with other elements of user equipment device 300. Display 312 may be one or more of a monitor, a television, a liquid crystal display (LCD) for a mobile device, or any other suitable equipment for displaying visual images. In some embodiments, display 312 may be HDTV-capable. Speakers 314 may be provided as integrated with other elements of user equipment device 300 or may be stand-alone units. The audio component of videos and other media content displayed on display 312 may be played through speakers 314. In some embodiments, the audio may be distributed to a receiver (not shown), which processes and outputs the audio via speakers 314.

The guidance application may be implemented using any suitable architecture. For example, it may be a stand-alone application wholly implemented on user equipment device 300. In such an approach, instructions of the application are stored locally, and data for use by the application is downloaded on a periodic basis (e.g., from the VBI of a television channel, from an out-of-band feed, or using another suitable approach). In another embodiment, the media guidance application is a client-server based application. Data for use by a thick or thin client implemented on user equipment device 300 is retrieved on-demand by issuing requests to a server remote to the user equipment device 300. In one example of a client-server based guidance application, control circuitry 304 runs a web browser that interprets web pages provided by a remote server.

In yet other embodiments, the media guidance application is downloaded and interpreted or otherwise run by an interpreter or virtual machine (run by control circuitry 304). In some embodiments, the guidance application may be encoded in the ETV Binary Interchange Format (EBIF), received by control circuitry 304 as part of a suitable feed, and interpreted by a user agent running on control circuitry 304. For example, the guidance application may be a EBIF widget. In other embodiments, the guidance application may be defined by a series of JAVA-based files that are received and run by a local virtual machine or other suitable middleware executed by control circuitry 304. In some of such embodiments (e.g., those employing MPEG-2 or other digital media encoding schemes), the guidance application may be, for example, encoded and transmitted in an MPEG-2 object carousel with the MPEG audio and video packets of a program.

User equipment device 300 of FIG. 3 can be implemented in system 400 of FIG. 4 as user television equipment 402, user computer equipment 404, wireless user communications device 406, or any other type of user equipment suitable for accessing media, such as a non-portable gaming machine. For simplicity, these devices may be referred to herein collectively as user equipment or user equipment devices. User equipment devices, on which a media guidance application is implemented, may function as a standalone device or may be part of a network of devices. Various network configurations of devices may be implemented and are discussed in more detail below.

User television equipment 402 may include a set-top box, an integrated receiver decoder (IRD) for handling satellite television, a television set, a digital storage device, a DVD recorder, a video-cassette recorder (VCR), a local media server, or other user television equipment. One or more of these devices may be integrated to be a single device, if desired. User computer equipment 404 may include a PC, a laptop, a tablet, a WebTV box, a personal computer television (PC/TV), a PC media server, a PC media center, or other user computer equipment. WEBTV is a trademark owned by Microsoft Corp. Wireless user communications device 406 may include PDAs, a mobile telephone, a portable video player, a portable music player, a portable gaming machine, or other wireless devices.

It should be noted that with the advent of television tuner cards for PC's, WebTV, and the integration of video into other user equipment devices, the lines have become blurred when trying to classify a device as one of the above devices. In fact, each of user television equipment 402, user computer equipment 404, and wireless user communications device 406 may utilize at least some of the system features described above in connection with FIG. 3 and, as a result, include flexibility with respect to the type of media content available on the device. For example, user television equipment 402 may be Internet-enabled allowing for access to Internet content, while user computer equipment 404 may include a tuner allowing for access to television programming. The media guidance application may also have the same layout on the various different types of user equipment or may be tailored to the display capabilities of the user equipment. For example, on user computer equipment, the guidance application may be provided as a web site accessed by a web browser. In another example, the guidance application may be scaled down for wireless user communications devices.

In system 400, there is typically more than one of each type of user equipment device but only one of each is shown in FIG. 4 to avoid overcomplicating the drawing. In addition, each user may utilize more than one type of user equipment device (e.g., a user may have a television set and a computer) and also more than one of each type of user equipment device (e.g., a user may have a PDA and a mobile telephone and/or multiple television sets).

The user may also set various settings to maintain consistent media guidance application settings across in-home devices and remote devices. Settings include those described herein, as well as channel and program favorites, programming preferences that the guidance application utilizes to make programming recommendations, display preferences, and other desirable guidance settings. For example, if a user sets a channel as a favorite on, for example, the web site www.tvguide.com on their personal computer at their office, the same channel would appear as a favorite on the user's in-home devices (e.g., user television equipment and user computer equipment) as well as the user's mobile devices, if desired. Therefore, changes made on one user equipment device can change the guidance experience on another user equipment device, regardless of whether they are the same or a different type of user equipment device. In addition, the changes made may be based on settings input by a user, as well as user activity monitored by the guidance application.

The user equipment devices may be coupled to communications network 414. Namely, user television equipment 402, user computer equipment 404, and wireless user communications device 406 are coupled to communications network 414 via communications paths 408, 410, and 412, respectively. Communications network 414 may be one or more networks including the Internet, a mobile phone network, mobile device (e.g., Blackberry) network, cable network, public switched telephone network, or other types of communications network or combinations of communications networks. BLACKBERRY is a service mark owned by Research In Motion Limited Corp. Paths 408, 410, and 412 may separately or together include one or more communications paths, such as, a satellite path, a fiber-optic path, a cable path, a path that supports Internet communications (e.g., IPTV), free-space connections (e.g., for broadcast or other wireless signals), or any other suitable wired or wireless communications path or combination of such paths. Path 412 is drawn with dotted lines to indicate that in the exemplary embodiment shown in FIG. 4 it is a wireless path and paths 408 and 410 are drawn as solid lines to indicate they are wired paths (although these paths may be wireless paths, if desired). Communications with the user equipment devices may be provided by one or more of these communications paths, but are shown as a single path in FIG. 4 to avoid overcomplicating the drawing.

Although communications paths are not drawn between user equipment devices, these devices may communicate directly with each other via communication paths, such as those described above in connection with paths 408, 410, and 412, as well other short-range point-to-point communication paths, such as USB cables, IEEE 1394 cables, wireless paths (e.g., Bluetooth, infrared, IEEE 802-11x, etc.), or other short-range communication via wired or wireless paths. BLUETOOTH is a certification mark owned by Bluetooth SIG, INC. The user equipment devices may also communicate with each other directly through an indirect path via communications network 414.

System 400 includes media content source 416 and media guidance data source 418 coupled to communications network 414 via communication paths 420 and 422, respectively. Paths 420 and 422 may include any of the communication paths described above in connection with paths 408, 410, and 412. Communications with the media content source 416 and media guidance data source 418 may be exchanged over one or more communications paths, but are shown as a single path in FIG. 4 to avoid overcomplicating the drawing. In addition, there may be more than one of each of media content source 416 and media guidance data source 418, but only one of each is shown in FIG. 4 to avoid overcomplicating the drawing. (The different types of each of these sources are discussed below.) If desired, media content source 416 and media guidance data source 418 may be integrated as one source device. Although communications between sources 416 and 418 with user equipment devices 402, 404, and 406 are shown as through communications network 414, in some embodiments, sources 416 and 418 may communicate directly with user equipment devices 402, 404, and 406 via communication paths (not shown) such as those described above in connection with paths 408, 410, and 412.

Media content source 416 may include one or more types of media distribution equipment including a television distribution facility, cable system headend, satellite distribution facility, programming sources (e.g., television broadcasters, such as NBC, ABC, HBO, etc.), intermediate distribution facilities and/or servers, Internet providers, on-demand media servers, and other media content providers. NBC is a trademark owned by the National Broadcasting Company, Inc., ABC is a trademark owned by the ABC, INC., and HBO is a trademark owned by the Home Box Office, Inc. Media content source 416 may be the originator of media content (e.g., a television broadcaster, a Webcast provider, etc.) or may not be the originator of media content (e.g., an on-demand media content provider, an Internet provider of video content of broadcast programs for downloading, etc.). Media content source 416 may include cable sources, satellite providers, on-demand providers, Internet providers, or other providers of media content. Media content source 416 may also include a remote media server used to store different types of media content (including video content selected by a user), in a location remote from any of the user equipment devices. Systems and methods for remote storage of media content, and providing remotely stored media content to user equipment are discussed in greater detail in connection with Ellis et al., U.S. Patent Application No. 09/332,244, filed June 11, 1999, which is hereby incorporated by reference herein in its entirety.

Media guidance data source 418 may provide media guidance data, such as media listings, media-related information (e.g., broadcast times, broadcast channels, media titles, media descriptions, ratings information (e.g., parental control ratings, critic's ratings, etc.), genre or category information, actor information, logo data for broadcasters' or providers' logos, etc.), media format (e.g., standard definition, high definition, etc.), advertisement information (e.g., text, images, media clips, etc.), on-demand information, and any other type of guidance data that is helpful for a user to navigate among and locate desired media selections.

Media guidance application data may be provided to the user equipment devices using any suitable approach. In some embodiments, the guidance application may be a stand-alone interactive television program guide that receives program guide data via a data feed (e.g., a continuous feed, trickle feed, or data in the vertical blanking interval of a channel). Program schedule data and other guidance data may be provided to the user equipment on a television channel sideband, in the vertical blanking interval of a television channel, using an in-band digital signal, using an out-of-band digital signal, or by any other suitable data transmission technique. Program schedule data and other guidance data may be provided to user equipment on multiple analog or digital television channels. Program schedule data and other guidance data may be provided to the user equipment with any suitable frequency (e.g., continuously, daily, a user-specified period of time, a system-specified period of time, in response to a request from user equipment, etc.). In some approaches, guidance data from media guidance data source 418 may be provided to users' equipment using a client-server approach. For example, a guidance application client residing on the user's equipment may initiate sessions with source 418 to obtain guidance data when needed. Media guidance data source 418 may provide user equipment devices 402, 404, and 406 the media guidance application itself or software updates for the media guidance application.

Media guidance applications may be, for example, stand-alone applications implemented on user equipment devices. In other embodiments, media guidance applications may be client-server applications where only the client resides on the user equipment device. For example, media guidance applications may be implemented partially as a client application on control circuitry 304 of user equipment device 300 and partially on a remote server as a server application (e.g., media guidance data source 418). The guidance application displays may be generated by the media guidance data source 418 and transmitted to the user equipment devices. The media guidance data source 418 may also transmit data for storage on the user equipment, which then generates the guidance application displays based on instructions processed by control circuitry.

Media guidance system 400 is intended to illustrate a number of approaches, or network configurations, by which user equipment devices and sources of media content and guidance data may communicate with each other for the purpose of accessing media and providing media guidance. The present invention may be applied in any one or a subset of these approaches, or in a system employing other approaches for delivering media and providing media guidance. The following three approaches provide specific illustrations of the generalized example of FIG. 4.

In one approach, user equipment devices may communicate with each other within a home network. User equipment devices can communicate with each other directly via short-range point-to-point communication schemes describe above, via indirect paths through a hub or other similar device provided on a home network, or via communications network 414. Each of the multiple individuals in a single home may operate different user equipment devices on the home network. As a result, it may be desirable for various media guidance information or settings to be communicated between the different user equipment devices. For example, it may be desirable for users to maintain consistent media guidance application settings on different user equipment devices within a home network, as described in greater detail in Ellis et al., U.S. Patent Application No. 11/179,410, filed July 11, 2005. Different types of user equipment devices in a home network may also communicate with each other to transmit media content. For example, a user may transmit media content from user computer equipment to a portable video player or portable music player.

In a second approach, users may have multiple types of user equipment by which they access media content and obtain media guidance. For example, some users may have home networks that are accessed by in-home and mobile devices. Users may control in-home devices via a media guidance application implemented on a remote device. For example, users may access an online media guidance application on a website via a personal computer at their office, or a mobile device such as a PDA or web-enabled mobile telephone. The user may set various settings (e.g., recordings, reminders, or other settings) on the online guidance application to control the user's in-home equipment. The online guide may control the user's equipment directly, or by communicating with a media guidance application on the user's in-home equipment. Various systems and methods for user equipment devices communicating, where the user equipment devices are in locations remote from each other, is discussed in, for example, Ellis et al., U.S. Patent Application No. 10/927,814, filed August 26, 2004, which is hereby incorporated by reference herein in its entirety.

In a third approach, users of user equipment devices inside and outside a home can use their media guidance application to communicate directly with media content source 416 to access media content. Specifically, within a home, users of user television equipment 404 and user computer equipment 406 may access the media guidance application to navigate among and locate desirable media content. Users may also access the media guidance application outside of the home using wireless user communications devices 406 to navigate among and locate desirable media content.

It will be appreciated that while the discussion of media content has focused on video content, the principles of media guidance can be applied to other types of media content, such as music, images, multimedia, etc.

FIG. 5A shows visual keypad 500. Visual keypad 500 includes user-selectable letters A through Z in a grid format. A user may navigate cursor 504 to any letter in the grid to select that letter for input. Visual keypad 500 also includes non-alphanumeric function pane 502. Non-alphanumeric function pane 502 includes at least one non-alphanumeric or function button. A user may also navigate cursor 504 to any button in non-alphanumeric function pane 502. In the example of FIG. 5A, non-alphanumeric function pane 502 includes a button to clear the current input string, a button to clear the last character in the current input string (i.e., go back), a button to input a space, and a button to access numbers, symbols, and punctuation characters. In other embodiments, non-alphanumeric function pane 502 may include more or fewer buttons. Non-alphanumeric function pane 502 may also include one or more buttons that execute a function (e.g., a button to access an advanced editing interface, a button to change the display location or size of visual keypad 500, or a button to toggle on and off one or more enhanced user input features, such as automatic string completion, automatic next character selection, or automatic character removal).

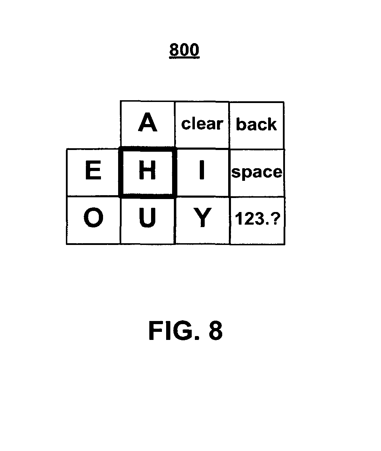

Although visual keypad 500 is shown as a rectangular grid in the example of FIG. 5A, the shape, size, and letter layout of the visual keypads described herein may differ in other embodiments. For example, the keypad may be square or a single row or column of lettered buttons. The buttons may be square or take the form of user-selectable graphic icons of any size or shape. In addition, although an alphabetic ordering is shown in the example keypad layout of FIG. 5A, other layouts and letter orderings may be used in other embodiments. For example, a QWERTY keyboard layout may be used or the layout may be based on a frequency analysis of the next potential character input, as described in more detail with regard to FIG. 8, below. For example, the layout may be dynamically changed based, at least in part, on the likelihood of the next character to be inputted. Letters that are more likely to be the next character input in the input string may be displayed closer to the current cursor position than characters less likely to be the next character input in the input string.

As shown in FIG. 5A, visual keypad 500 may be initially displayed with cursor 504 in a default position. The default position may be centered within visual keypad 500 over the letter "M" in some embodiments. Non-alphanumeric function pane 502 may be displayed around the perimeter of the A-Z alphabet key block. Although non-alphanumeric function pane 502 is shown to the right of the alphabet block in the example of FIG. 5A, non-alphanumeric function pane 502 could be displayed to the left, at the top, or at the bottom of the alphabet block in other embodiments.

It should be noted in FIG. 5A that a user may reach non-alphanumeric function pane 502 from the current cursor position with three cursor position movements. In a typical usage scenario, a user would press the right direction key or arrow on a user input device (e.g., user input interface 310 (FIG. 3)) three times in order to move cursor 504 to the "space" button in non-alphanumeric function pane 502. As described in more detail below, as cursor 504 is moved within visual keypad 500, non-alphanumeric function pane 502 may orbit, or rotate, around some or all of the A-Z alphabet block. This allows non-alphanumeric function pane 502 to be redisplayed in the location that is the fewest cursor positions away from the current cursor position.

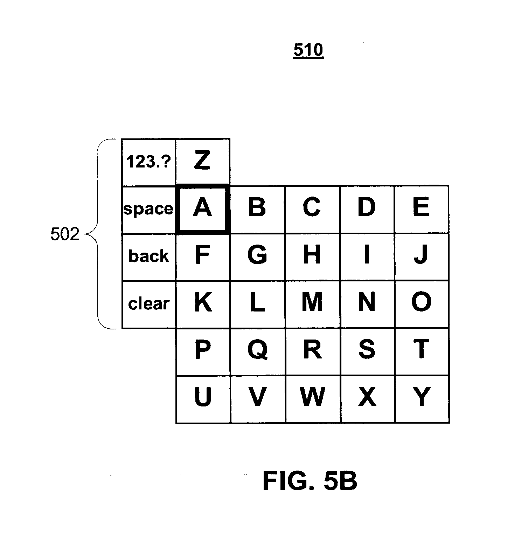

FIG. 5B shows visual keypad 510. In FIG. 5B, the user has moved the cursor to the letter "A" in the upper-left hand corner of the alphabet block. In response to moving the cursor to that position, non-alphanumeric function pane 502 may be redisplayed adjacent to the current cursor position. As such, non-alphanumeric function pane 502 is only one cursor position away from the current cursor position. A user may press the left direction key or arrow on a user input device (e.g., user input interface 310 (FIG. 3)) a single time to access non-alphanumeric function pane 502.

As previously disclosed, non-alphanumeric function pane 502 may be displayed so that it is always in the closest position to the current cursor position. Sometimes, there may be two or more positions equidistant from the current cursor position. In these cases, in some embodiments, non-alphanumeric function pane 502 may be displayed in any of the equidistant positions. In addition, if non-alphanumeric function pane 502 includes more than one button or key, the location of the button or key used the most frequently in non-alphanumeric function pane 502 may be used when determining the position of the pane. For example, the "back" button may be the most frequently used button in non-alphanumeric function pane 502 (based on, for example, user activity monitoring). The position of the back button may therefore be used when determining the distance between non-alphanumeric function pane 502 and the current cursor position.

In some embodiments, non-alphanumeric function pane 502 takes the form of an undocked frame, window, or pane that orbits or rotates around some or all of the A-Z alphabet block. As an undocked frame, window, or pane, the user may also drag non-alphanumeric function pane 502 to any desired location on the screen. In other embodiments, non-alphanumeric function pane 502 takes the form of a sliding frame implemented using a mark-up (e.g., HTML) or web scripting language. For example, the visual keypad and non-alphanumeric function pane 502 may be implemented using a web page and the Java programming language.

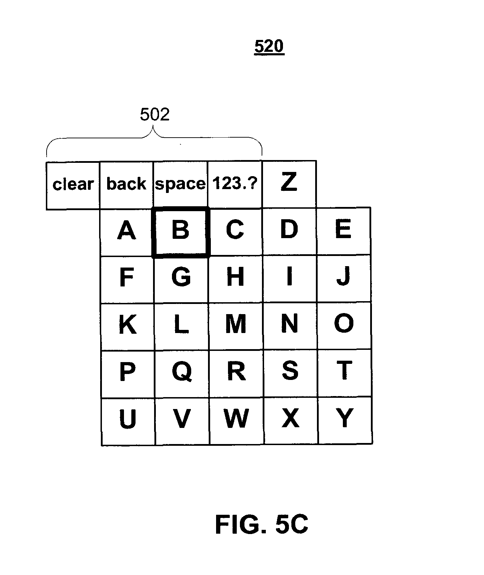

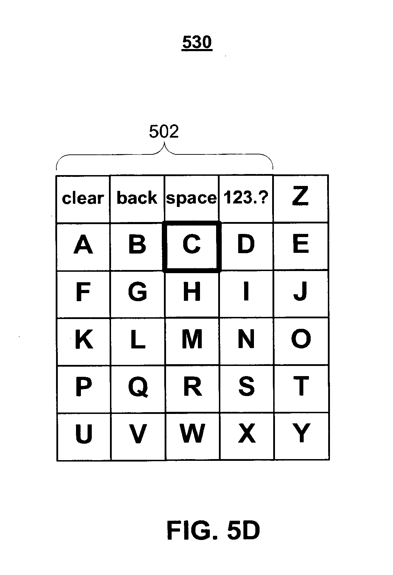

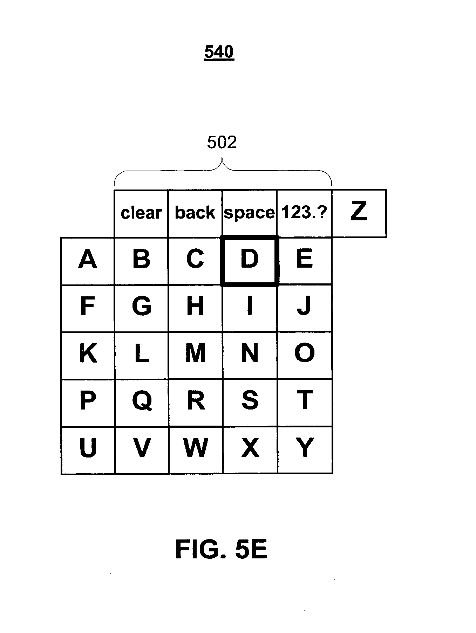

FIG. 5C shows keypad 520 with the cursor on letter "B" in the upper row of the alphabet block. Non-alphanumeric function pane 502 orbits or rotates so that the pane is adjacent to the current cursor position. FIG. 5D shows keypad 530 with the cursor on letter "C" in the upper row of the alphabet block. Non-alphanumeric function pane 502 orbits or rotates so that the pane is adjacent to the current cursor position. FIG. 5E shows keypad 540 with the cursor on letter "D" in the upper row of the alphabet block. Non-alphanumeric function pane 502 orbits or rotates so that the pane is adjacent to the current cursor position.

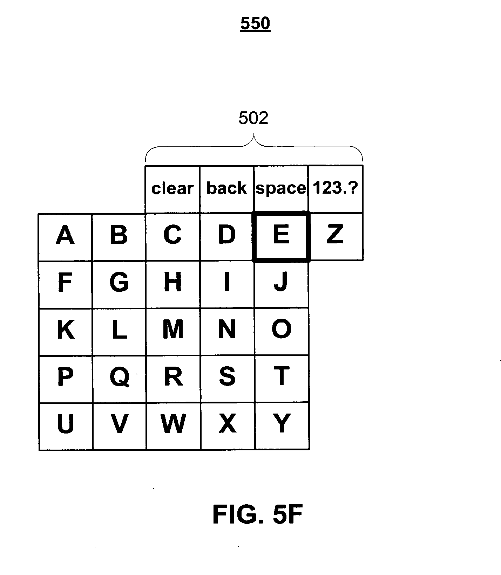

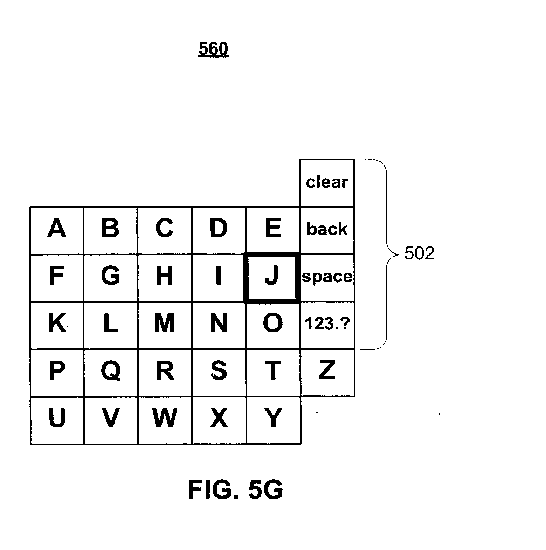

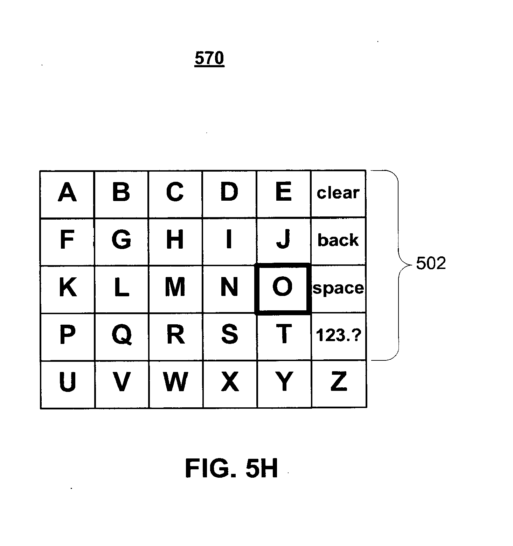

FIG. 5F shows keypad 550 with the cursor on letter "E" in the upper row of the alphabet block. Non-alphanumeric function pane 502 orbits or rotates so that the pane is adjacent to the current cursor position. FIG. 5G shows keypad 560 with the cursor on letter "J" in the right column of the alphabet block. Non-alphanumeric function pane 502 orbits or rotates so that the pane is adjacent to the current cursor position. FIG. 5H shows keypad 570 with the cursor on letter "O" in the right column of the alphabet block. Non-alphanumeric function pane 502 orbits or rotates so that the pane is adjacent to the current cursor position.

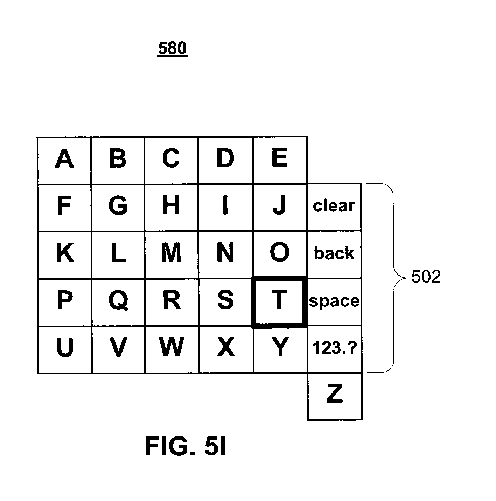

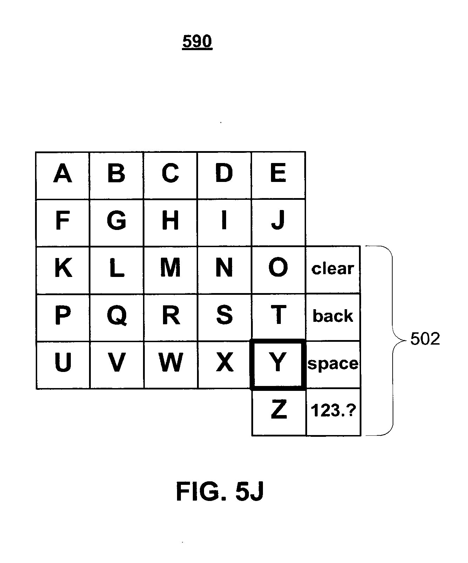

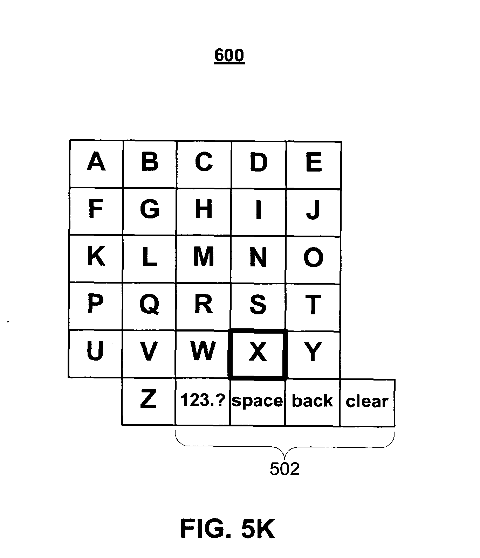

FIG. 5I shows keypad 580 with the cursor on letter "T" in the right column of the alphabet block. Non-alphanumeric function pane 502 orbits or rotates so that the pane is adjacent to the current cursor position. FIG. 5J shows keypad 590 with the cursor on letter "Y" in the right column of the alphabet block. Non-alphanumeric function pane 502 orbits or rotates so that the pane is adjacent to the current cursor position. FIG. 5K shows keypad 600 with the cursor on letter "X" in the bottom row of the alphabet block. Non-alphanumeric function pane 502 orbits or rotates so that the pane is adjacent to the current cursor position.

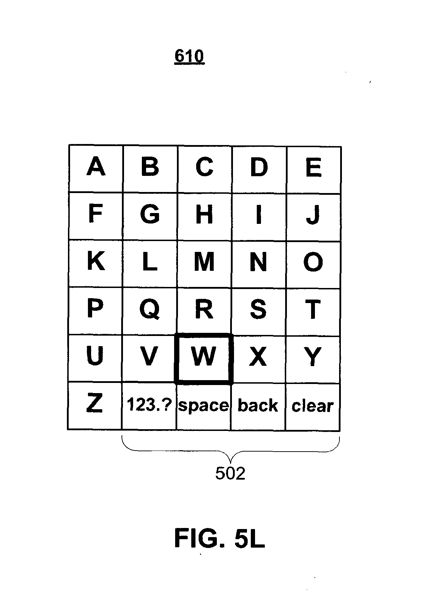

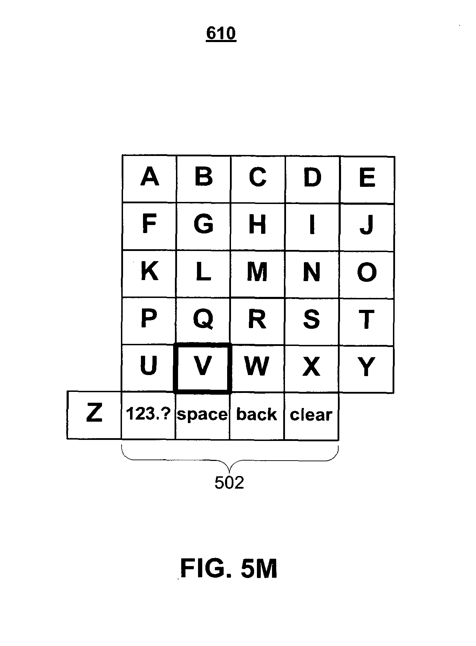

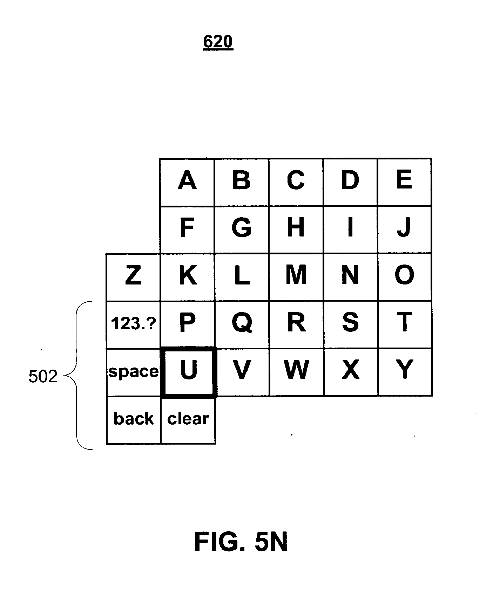

FIG. 5L shows keypad 610 with the cursor on letter "W" in the bottom row of the alphabet block. Non-alphanumeric function pane 502 orbits or rotates so that the pane is adjacent to the current cursor position. FIG. 5M shows keypad 610 with the cursor on letter "V" in the bottom row of the alphabet block. Non-alphanumeric function pane 502 orbits or rotates so that the pane is adjacent to the current cursor position. FIG. 5N shows keypad 620 with the cursor on letter "U" in the bottom row of the alphabet block. Non-alphanumeric function pane 502 orbits or rotates so that the pane is adjacent to the current cursor position.

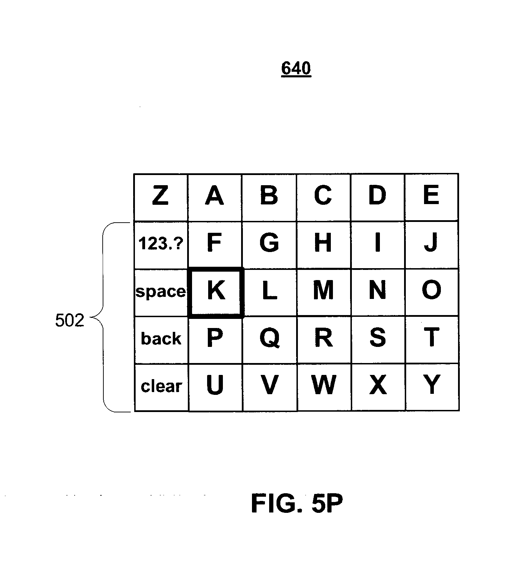

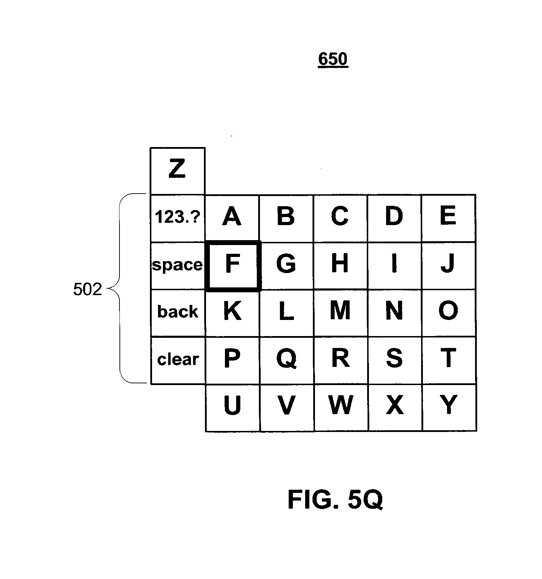

FIG. 50 shows keypad 630 with the cursor on letter "P" in the left column of the alphabet block. Non-alphanumeric function pane 502 orbits or rotates so that the pane is adjacent to the current cursor position. FIG. 5P shows keypad 640 with the cursor on letter "K" in the left column of the alphabet block. Non-alphanumeric function pane 502 orbits or rotates so that the pane is adjacent to the current cursor position. FIG. 5Q shows keypad 650 with the cursor on letter "F" in the left column of the alphabet block. Non-alphanumeric function pane 502 orbits or rotates so that the pane is adjacent to the current cursor position.

As shown in FIGS 5A-5Q and described above, non-alphanumeric function pane 502 may rotate, or orbit, around some or all of the core A-Z alphabet block so that the pane is adjacent to the current cursor position. If the cursor is currently positioned around a letter inside the outer perimeter of the alphabet block (e.g., letters G, H, I, L, M, N, Q, R, and S in the example shown in FIGS. 5A-5Q), then non-alphanumeric function pane 502 may be displayed so that the number of cursor positions to reach non-alphanumeric function pane 502 is minimized. This functionality permits more efficient user input because the button or buttons in non-alphanumeric function pane 502 are closer to the current cursor position and hence take fewer button presses to reach using a user input device (e.g., user input interface 310 (FIG. 3)).

Although non-alphanumeric function pane 502 includes three buttons in the depicted embodiment, non-alphanumeric function pane 502 could include a single button or key in some embodiments. For example, in some embodiments, only the "back" button may be included in non-alphanumeric function pane 502. As the cursor is moved within the visual keypad, only that button may rotate, or orbit, around the alphabet block. Any other non-alphanumeric or function keys may be statically displayed.

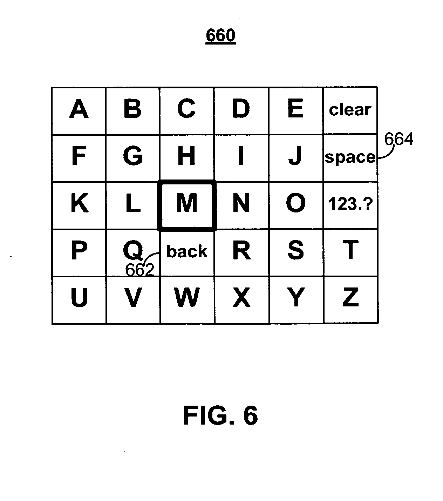

Additionally or alternatively, one or more non-alphanumeric or function keys may also be displayed within the core alphabet key block. This is shown in FIG. 6 where "back" button 662 is displayed adjacent to the current cursor position. As the cursor is moved within keypad 660, button 662 may follow the current cursor position so that button 662 is always adjacent to the cursor. In this way, the user may access button 662 with fewer button presses or key strokes. Although button 662 appears below the current cursor position in the example of FIG. 6, it could also be displayed above, to the left, or to the right of the current cursor position in other embodiments. The alphabet block may be adjusted or shifted so that button 662 is displayed adjacent to the current cursor position while maintaining the A-Z alphabet sequence structure. Non-alphanumeric button 664 may move with button 662 or may be statically displayed.

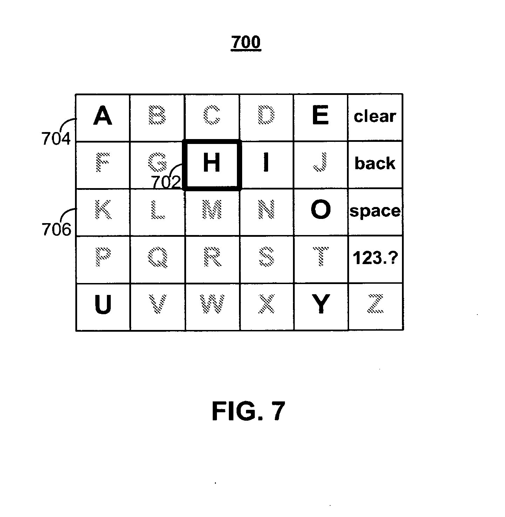

FIG. 7 shows visual keypad 700 with one or more disabled buttons. After a user selects a character within keypad 700 for input (e.g., button 702 corresponding to the letter "H"), buttons corresponding to letters that cannot possibly be the next character in the user input string may be disabled, grayed out, removed, or otherwise visually distinguished from buttons corresponding to letters that may validly be the next character in the user input string. For example, button 704 (which corresponds to the letter "A") may be enabled after the user inputs the letter "H" because it matches, for example, some portion of the title of a program series. Button 706 (which corresponds to the letter "K") may be disabled, grayed out, removed, or otherwise visually distinguished in visual keypad 700 because the letter "K" cannot be a valid next character in the user input string. A list or tree (or any other suitable data structure) of candidate strings may be maintained in memory on the user equipment. In some embodiments, the set of valid candidate strings may be based, at least in part, on program schedule information in the program schedule database. For example, if the user is inputting a program title, the set of valid candidate strings in the list or tree may include all program titles included in the program schedule database (plus, optionally, titles for programs recorded to a local or network recording device, accessible on-demand, or through a pay-per-view service).

FIG. 8 shows visual keypad 800 with one or more disabled buttons actually removed from the keypad. For example, the disabled buttons in visual keypad 700 (FIG. 7) may be removed from the keypad in order to reduce the display area of keypad 800 and to simplify navigation and user selection. Visual keypad 800 also helps reduce ambiguity in visual keypad 700 (FIG. 7). For example, if the user presses the up directional key or arrow while the cursor is on button 702 (FIG. 7), it may not be apparent to the user to which enabled button the cursor would move (e.g., either to the button corresponding to the letter "A" or to the button corresponding to the letter "E"). By actually removing the disabled buttons and redrawing the keypad such ambiguity may be avoided. Visual keypad 800 may be redrawn after each character selection to include only the valid next character or characters in the current input string. As such, keypad 800 may be redisplayed with a greater or fewer number of buttons after each character input. The A-Z alphabet sequence layout may be maintained.

Because buttons corresponding to disabled letters may be removed, visual keypad 800 may also include a special function button to restore the keypad to full form (i.e., including all letters A-Z) so that the user may input a string that does not correspond to a valid candidate string. In this way, the user may still input a string that may not be included in the program schedule database or candidate string tree (e.g., available on a local or network recording device, or via an on-demand or pay-per-view service).

Although keypad 800 may maintains alphabetical ordering of the remaining keys, in some embodiments, the layout is based, at least in part, on the computed likelihood metrics of the remaining letters in the keypad. For example, buttons corresponding to letters with higher likelihood metrics may be displayed adjacent to the current cursor position, while buttons corresponding to letters with lower likelihood metrics may be displayed further away from the current cursor position. In some embodiments, a letter's likelihood metric is proportional to the number of valid candidate strings using that letter as the next input character. In other embodiments, as described in more detail below, a letter's likelihood metric may be additionally or alternatively based on user monitoring and user profile information. In this way, buttons corresponding to more likely next characters may be fewer cursor positions away from the current cursor position, regardless of how close in the alphabet the characters are to the current character input. Keypad 800 may be dynamically redisplayed or redrawn to adjust the letter layout after each character input.

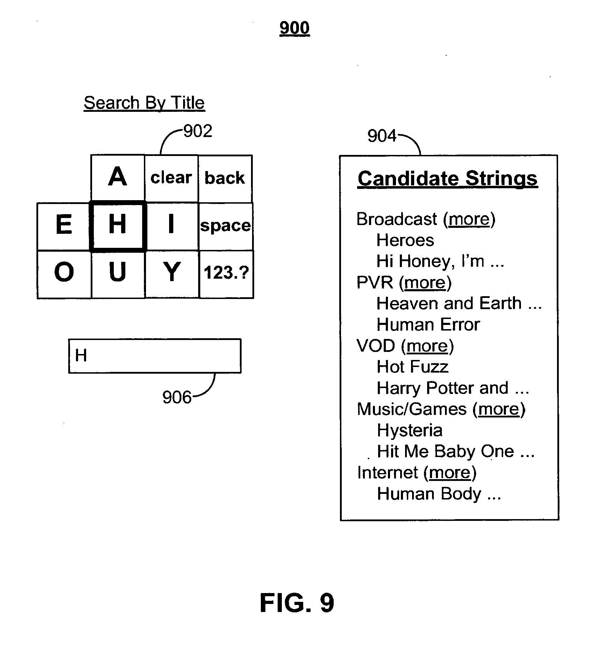

FIG. 9 shows visual keypad and candidate string display pair 900. Visual keypad 902 may include any visual keypad described herein, including keypad 800 with disabled buttons removed. As the user enters more letters of the input string (which may be displayed in field 906), candidate strings may be simultaneously displayed in interactive candidate strings listing 904. In some embodiments, listing 904 may be categorized by genre (e.g., sports, movies, sitcoms) or source type (e.g., broadcast, PVR, VOD, digital music, and Internet resources). Under each category, the matching resultant strings may be displayed. The user may navigate the cursor from keypad 902 to listing 904 and select any string displayed in listing 904. After selecting a candidate string, the string may be automatically input as the user's input string. When only a single candidate string remains in the tree, that string may be automatically inputted for the user, in some embodiments.

In some embodiments, candidate strings displayed in listing 904 (and used for keypad character removal) may be ranked using user profile information. For example, the user's most frequently watched channels, programs, and genres may be monitored by the media guidance application and saved to a user profile. Candidate strings with a low likelihood of being the actual string being inputted by the user (based, for example, at least in part on the user monitoring, user profile information, or both) may be removed from the automatic string completion tree. In some embodiments, removal from the string completion tree results in the visual keypad (e.g., keypad 800 of FIG. 8) being redisplayed without buttons corresponding to letters that are most likely not the next input character (but still match a potentially valid string). In addition, in some embodiments, listing 904 may not display candidate strings with a low likelihood of being the actual string being inputted by the user (based again, for example, at least in part on the user monitoring and user profile information). A user-selectable option to restore such low likelihood string or strings to listing 904 and the next character in those strings to keypad 800 (FIG. 8) may be displayed simultaneously with listing 904 or keypad 800 (FIG. 8).

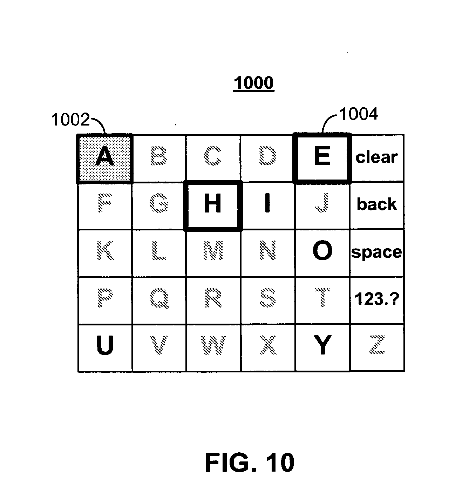

FIG. 10 shows visual keypad 1000 with automatic next character selection support. A frequency analysis engine may output the frequencies of all possible letter combinations in an input string. One or more bigram tables (or more generally n-gram tables) may also be stored on the user equipment device in some embodiments. The bigram (or *n*-gram) tables may be based on the English language or some subset of the English language. For example, in some embodiments, the subset of the English language used to construct the bigram (or *n*-gram) tables may include only words (and optionally names) included in the program schedule database. This way, only common multiple-letter combinations appearing in program titles and program descriptions in the program schedule database may be included in the bigram (or *n*-gram) tables.

Bigrams and other common multiple-letter combinations may be automatically completed when the likelihood of a correct completion exceeds some threshold likelihood value. The likelihood of a correct completion may additionally be determined based at least in part on the strings still remaining in the tree of candidate resultant strings. The likelihood may additionally be based on user monitoring and user profile information, as described above with regard candidate string ranking. If both a frequency analysis and user profile/user monitoring are used to determine the likelihood of a correct completion, each of these two terms may be assigned user-configurable weights. A total likelihood metric may then be computed for each potential next character or string completion as the sum of the two weighted terms. When a total likelihood metric exceeds some predetermined value, the next character or string completion associated with that metric may be automatically inputted for the user. In this way, user string input may be anticipated, increasing the input efficiency and decreasing the number of button presses required to input the string.

In some embodiments, instead of or in addition to automatically inputting or automatically completing the next character or characters for the user based on its likelihood, the cursor position may be automatically moved to the most likely next character in the string without automatically selecting and inputting the next character for the user. The user may then decide whether or not to input the character identified by the automatic cursor movement. This approach also increases input efficiency because the user need not manually move the cursor to the likely next character. As shown in visual keypad 1000, after the user has selected the button corresponding to the letter "H" for input, the cursor has automatically moved to button 1004 corresponding to the letter "E" for the next character input. The letter "E" may be the most likely next character input based on, for example, the frequency analysis, the *n*-gram tables, user monitoring, user profile information, or any combination of the foregoing.

In some embodiments, other buttons may also be visually distinguished in visual keypad 1000. For example, in addition to automatic cursor movement to the most likely next character, the *N* characters with the next highest likelihood values (after the most likely next character) may be visually distinguished in keypad 1000, were *N* is any positive number. For example, button 1004 may correspond to the most likely next character and button 1002 may correspond to next most likely next character. Button 1004 may be automatically preselected (or the cursor may be automatically moved to button 1004) while button 1002 is visually distinguished. For example, button 1002 may be displayed in a different font color, a different font size, or a different font style (e.g., bold or italics).

If more than one character is to be visually distinguished, a gradient of colors (e.g., from darker to lighter) or font sizes (e.g., from larger to smaller) may be used. For example, with regard to FIG. 10, if the letter "E" is the most likely next character after "H", and the letters "A" "I" "O", and "U" are the next most likely next characters (in that order), then the letter "E" may be displayed in the largest font (or darkest color) and the letters "A", "I", "O", and "U" may be displayed in decreasing font sizes (or increasingly lighter colors). In some embodiments, instead of or in addition to changing the font size or color, the buttons themselves are modified or visually distinguished. For example, the size of the buttons themselves may be based, at least in part, on the likelihood metric computed for the letters corresponding to the buttons. Buttons corresponding to letters with higher likelihood metrics may be displayed larger than buttons corresponding to letters with lower likelihood metrics.

Any of the features described above with regard to FIGS. 6, 7, 8, 9, and 10 may be combined with the floating non-alphanumeric function pane of FIGS. 5A-5Q. In addition, the enhanced user input features, such as automatic string completion, automatic next character selection, and automatic character removal, may be combined with other features described herein (and with the floating non-alphanumeric function pane of FIGS. 5A-5Q) in a single visual keypad. User-selectable options may also be displayed to toggle on and off the floating non-alphanumeric function pane and enhanced user input features, resulting a user-configurable visual keypad with a custom level of enhanced input.

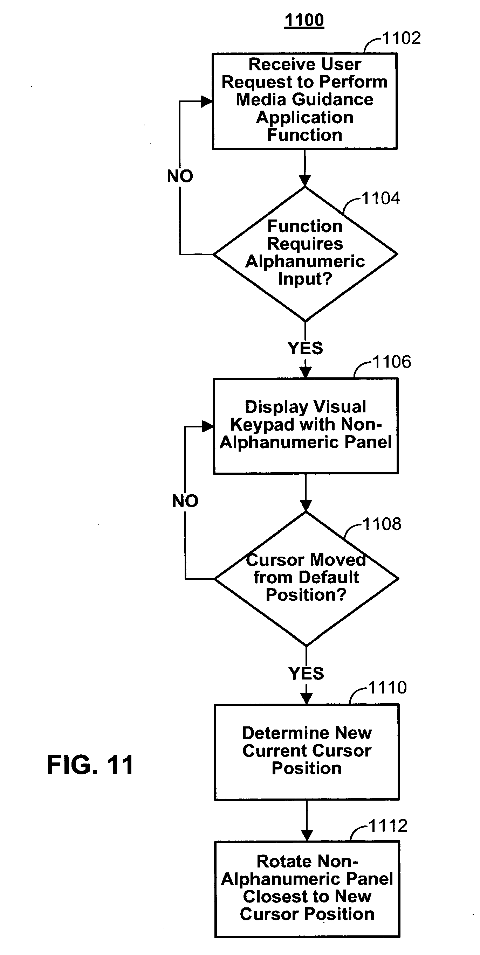

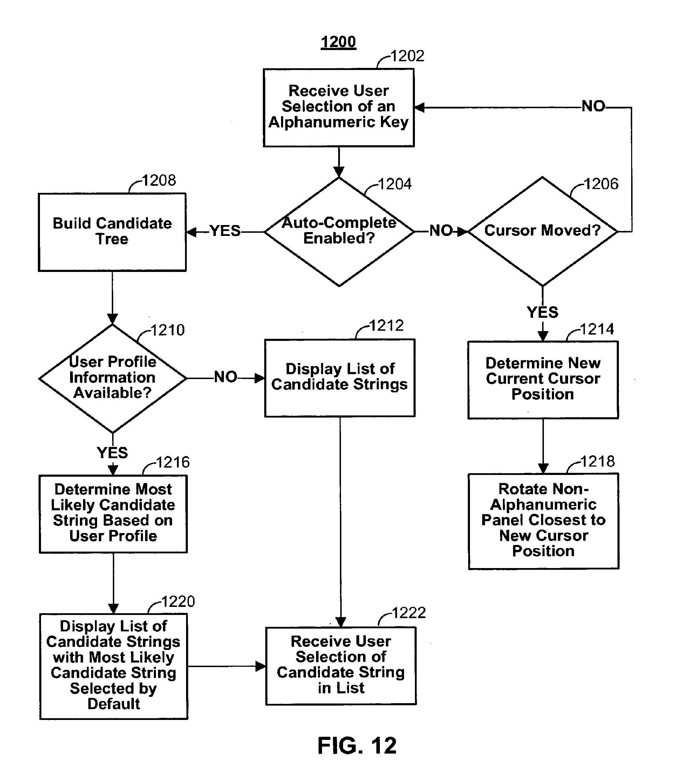

FIGS. 11 and 12 show illustrative processes for supporting the visual keypads described herein. FIG. 11 shows illustrative process 1100 for displaying a rotating or orbiting non-alphanumeric pane or panel. At step 1102, a user request to perform a media guidance application function is received. For example, a user may press a button or select an on-screen option using user input interface 310 (FIG. 3). The media guidance application function may include, for example, searching for a particular asset by title, author, actor, director, genre, program type, or any other suitable characteristic. At step 1104, a determination may be made whether the requested function requires some alphanumeric input. For example, control circuitry 304 (FIG. 3) may determine that the requested function requires a program title input from the user. If no alphanumeric input is required at step 1104, process 1100 may return to step 1102.

If alphanumeric input is required at step 1104, a visual keypad may be displayed with a non-alphanumeric panel. For example keypad 500 (FIG. 5A), keypad 660 (FIG. 6), keypad 700 (FIG. 7), keypad 800 (FIG. 8), keypad and candidate string display pair 900 (FIG. 9), or keypad 1000 (FIG. 10) may be displayed at step 1106. As described above, the displayed keypad may be displayed with a cursor (e.g., cursor 504 of FIG. 5A) used to select buttons in the keypad. The cursor may be initially displayed in a default location, for example in the center of the keypad.

At step 1108, a determination may be made whether the cursor has been moved from the default display position. For example, control circuitry 304 (FIG. 3) may determine if some user instruction has been initiated using user input interface 310 (FIG. 3). The user instruction may be the press of a directional arrow or key on a remote control in some embodiments. The user may move the cursor in one or more directions, based on the actual shape and layout of the visual keypad. If the cursor has not been moved from its default position, process 1100 may return to step 1106

If, however, a user instruction has been received to move the cursor from its default position, a new cursor position may be determined at step 1110. For example, if the left directional arrow is pressed on a remote control device, the cursor may be moved to the button in the visual keypad immediately to the left of the previous cursor position. In a similar way, the user may navigate the cursor in one or more directions to other buttons in the visual keypad.

At step 1112, a non-alphanumeric pane or panel is redisplayed so that the pane is closer to the new cursor position. For example, the non-alphanumeric pane or panel may rotate, or orbit, around some or all of the core A-Z key block as shown in FIGS. 5A-5Q so that at least one button in the pane is closer to the new cursor position. FIGS. 5A-5Q show one illustrate arrangement for redisplaying a non-alphanumeric pane or panel as the cursor is moved within the keypad. Other arrangements may be used in other embodiments. The non-alphanumeric pane or panel may include one or more non-alphanumeric or function buttons. In the example of FIG. 5A, the pane includes a button to clear the current input string, a button to clear the last character in the current input string (i.e., go back), a button to input a space, and a button to access numbers, symbols, and punctuation characters. More or fewer buttons may be included in the non-alphanumeric pane or panel in other embodiments.

In practice, one or more steps shown in process 1100 may be combined with other steps, performed in any suitable order, performed in parallel (e.g., simultaneously or substantially simultaneously), or removed.

FIG. 12 shows illustrative process 1200 for automatically completing a user input string. At step 1202, a user selection of an alphanumeric key is received. For example, the user may navigate cursor 504 (FIG. 5A) to a button corresponding to a desired letter for input. The user may then use user input interface 310 (FIG. 3) to input the letter or number. For example, the user could press an OK, select, or enter button on user input interface 310 (FIG. 3). At step 1204, a determination may be made whether automatic string completion is enabled. For example, the user may customize user preferences in the user's profile or toggle an on-screen option to enable or disable automatic string completion.

If automatic string completion is not enabled at step 1204, then a determination is made at step 1206 if a user instruction has been received to move the current cursor position. If no such instruction has been received, process 1200 may return to step 1202. If, however, a user instruction has been received to move the cursor, a new cursor position may be determined at step 1214. For example, if the left directional arrow is pressed on a remote control device, the cursor may be moved to the button in the visual keypad immediately to the left of the previous cursor position. In a similar way, the user may navigate the cursor in one or more directions to other buttons in the visual keypad.

At step 1218, a non-alphanumeric pane or panel is redisplayed so that it is closer to the new cursor position. For example, the non-alphanumeric pane or panel may rotate, or orbit, around some or all of the core A-Z key block as shown in FIGS. 5A-5Q so that at least one button in the pane is closer to the new cursor position.

If, at step 1204, automatic string completion is enabled, then at step 1208 a candidate string tree may be built. The tree may include all potentially valid strings matching the already inputted string character or characters. For example, if the user is inputting a program title, the titles of all available programming may be included in the tree. As the user inputs additional letters of the search string, the tree may be pruned accordingly to remove strings that do not match the already inputted characters. To build the tree, the program schedule database may be accessed (e.g., from storage 308 of FIG. 3) as well as information about programs available on-demand, via a pay-per-view service, or recorded locally or to a network media server.

After the candidate tree is built at step 1208, a determination is made whether user profile information is available at step 1210. For example, control circuitry 304 (FIG. 3) may access user profile information stored on storage 308 (FIG. 3). User profile information may include a variety of user-customizable settings, options, and preferences, as well as system-derived information.

For example, the media guidance application may monitor all user interaction with the user equipment or with the media guidance application itself. Some examples of the types of data that may be included in the user's profile include: (1) the media content the user has accessed, (2) the television channels the user has accessed, (3) the length of time the user has accessed programming, (4) advertisements viewed or with which the user has otherwise interacted, (5) the programming scheduled for recording, (6) the programming scheduled for viewing, (7) the user's favorite programs, (8) the user's favorite channels, or any other suitable information about the user, including socio-demographic information (e.g., age, sex, geographic location, income, and education level). User profiles may be maintained for each user accessing the user equipment (e.g., user television equipment 402, user computer equipment 404, and wireless user communications device 406, all of FIG. 4) or a single system-wide user profile may be maintained. An authentication scheme (e.g., username and password combination, PIN code, or biometric authentication) may be used to determine which user or users are currently accessing the user equipment.

If a profile is not available for the current user (e.g., the user has not been authenticated and no system-wide profile exists), then a list of candidate strings may be displayed at step 1212. For example, listing 904 (FIG. 9) may be displayed. The listing may be separated into categories by genre, type, or source. After the list is displayed, at step 1222, the user may navigate a cursor to any entry in the list to select the string for automatic input.

If, however, user profile information is available for the current user at step 1210 (or a system-wide profile exists), the most likely candidate string may be determined at step 1216 based, at least in part, on the user profile information. Control circuitry 304 (FIG. 3) may compute likelihood metrics for each candidate string in the candidate tree and select the string with the largest metric. In some embodiments, a string's total likelihood metric is the weighted sum of a plurality of terms. The terms used to compute the metrics and the weights assigned to each term may be user-configurable through a setup screen (not shown).

For example, a simple likelihood metric may be computed using three terms. The first term may represent a user monitoring term. This term may be based on the user's past media content viewing. Candidate strings matching, for example, the genre, title, actor, director, or content type of the user's viewing history information as indicated by the user's profile may be assigned greater values for this term. In this way, candidate strings more similar to the user's viewing history may be assigned greater values for this term.

The second term may represent a user favorites term. This term may be based on the user's favorite genres, programs, actors, and directors, as defined by the user and saved to the user's profile. Candidate strings matching, for example, the genre, title, actor, or director of the user's favorites may be assigned greater values for this term.

The third term may represent a user demographic term. The value for this term may be based, for example, on the user's age, sex, religion, relationship status, income, education level, or any other suitable demographic or socio-demographic factor. As a simple example, if the user's profile information indicates that the user is a child (age 12), then candidate strings referencing adult content may be assigned lower values for this term. Candidate strings referencing content designated as children's content (e.g., based on the content's MPAA or TV rating or metadata associated with the content) may be assigned greater values for this term.

To compute a total likelihood metric, each of the three terms may be multiplied by the assigned weight for that term and summed. Although three weighted terms are used in the described example, more or fewer terms (either weighted or unweighted) may be used in other embodiments. At step 1220, the candidate string with the greatest likelihood metric may be selected by default in a candidate strings listing (such as listing 904 of FIG. 9). For example, the cursor may be automatically positioned over the candidate string with the greatest likelihood metric. In other embodiments, the candidate string with the greatest likelihood metric may be automatically inputted without any user selection.

At step 1222, a user selection is received of one candidate string in the listing (unless the string was automatically inputted). For example, the user may navigate a cursor to the listing and press an "OK" or select button on a user input device (e.g., user input interface 310 of FIG. 3). This selected string is then used as the user input string.

In practice, one or more steps shown in process 1200 may be combined with other steps, performed in any suitable order, performed in parallel (e.g., simultaneously or substantially simultaneously), or removed. In addition, the likelihood metric computation described above may be used in connection with the automatic string completion, automatic next character selection, automatic cursor movement, and automatic character removal features described above.

It should be noted that any of the visual keypads and enhanced input features described herein may be combined, or used in conjunction, with other keypads and other features. For example, the floating non-alphanumeric function pane shown in FIGS. 5A-5Q may be combined with the automatic string completion, automatic next character selection, automatic cursor movement, and automatic character removal features. The user may toggle visual keypad features on and off using on-screen options in order to be provided with a custom level of enhanced input. In addition, although the embodiments described herein are directed toward alphanumeric input, the enhanced visual keypad features and/or floating pane may be used to make other types of user input more efficient. For example, boolean search string input, and textual, graphic, or video mosaic selection or input (e.g., in a video or animation authoring tool) may all benefit from the enhanced visual keypad features and floating pane described herein.

The above described embodiments of the present invention are presented for purposes of illustration and not of limitation, and the present invention is limited only by the claims which follow.

## Claims

1. A method for supporting user input in a media guidance application implemented at least partially on user equipment (300), comprising:
generating for display a visual keypad (500) comprising:
a plurality of first user-selectable buttons, the plurality of first user-selectable buttons corresponding to at least some of the letters of the alphabet;
a function pane (502) comprising at least one second user-selectable button, the at least one second user-selectable button corresponding to a function related to the user input, the function pane being positionable in a plurality of positions with respect to the plurality of first user-selectable buttons; and
a user-navigable cursor (504);
receiving a user request to move the user-navigable cursor to a first new cursor position within the visual keypad; and
in response to receiving the user request, positioning the function pane in a position of the plurality of positions that is closest to the first new cursor position.

2. The method of claim 1, wherein positioning the function pane in the position of the plurality of positions that is closest to the first new cursor position comprises shifting at least some of the plurality of first user-selectable buttons to new locations in the visual keypad.

3. The method of claim 1 further comprising:
receiving a user selection of one of the plurality of first user-selectable buttons; and
in response to receiving the user selection, building a candidate string list or tree.

4. The method of claim 3 further comprising, in response to receiving the user selection, visually distinguishing at least one button of the plurality of first user-selectable buttons, the at least one visually distinguished button based, at least in part, on the candidate string list or tree.

5. The method of claim 3 further comprising, in response to receiving the user selection, removing at least one button of the plurality of first user-selectable buttons, the at least one removed button based, at least in part, on the candidate string list or tree.

6. A system for supporting user input in a media guidance application implemented at least partially on user equipment (300), comprising:
a user input interface (310);
a display device (312); and
control circuitry configured to:
generate for display, on the display device, a visual keypad (500) comprising:
a plurality of first user-selectable buttons, the plurality of first user-selectable buttons corresponding to at least some of the letters of the alphabet;
a function pane (502) comprising at least one second user-selectable button, the at least one second user-selectable button corresponding to a function related to the user input, the function pane being positionable in a plurality of positions with respect to the plurality of first user-selectable buttons; and
a user-navigable cursor (504);
receive, from the user input interface, a user request to move the user-navigable cursor to a first new cursor position within the visual keypad; and
in response to receiving the user, request, position the function pane in a position of the plurality of positions that is closest to the first new cursor position.

7. The system of claim 6, wherein the control circuitry is configured such that positioning the function pane in the position of the plurality of positions that is closest to the first new cursor position comprises shifting at least some of the plurality of first user-selectable buttons to new locations in the visual keypad.

8. The system of claim 6, wherein the control circuitry is further configured to:
receive a user selection of one of the plurality of first user-selectable buttons; and
in response to receiving the user selection, build a candidate string list or tree.

9. The system of claim 6 wherein the control circuitry is further configured to, in response to receiving the user selection, visually distinguish at least one button of the plurality of first user-selectable buttons, the at least one visually distinguished button based, at least in part, on the candidate string list or tree.

10. The system of claim 6, wherein the control circuitry is configured to, in response to receiving the user selection, remove at least one button of the plurality of first user-selectable buttons, the at least one removed button based, at least in part, on the candidate string list or tree.

## Patentansprüche

1. Verfahren zum Unterstützen einer Benutzereingabe in einer Medienführungsanwendung, die zumindest teilweise auf einer Benutzerausstattung (300) implementiert ist, umfassend:
Generieren eines visuellen Tastenfelds (500) für die Anzeige, umfassend:
eine Mehrzahl von ersten vom Benutzer auswählbaren Schaltflächen, wobei die Mehrzahl von ersten vom Benutzer auswählbaren Schaltflächen zumindest einigen Buchstaben des Alphabets entspricht;
ein Funktionsfenster (502), das zumindest eine zweite vom Benutzer auswählbare Schaltfläche umfasst, wobei die zumindest eine zweite vom Benutzer auswählbare Schaltfläche einer Funktion im Zusammenhang mit der Benutzereingabe entspricht, wobei das Funktionsfenster in einer Mehrzahl von Positionen in Bezug zu der Mehrzahl von ersten vom Benutzer auswählbaren Schaltflächen positionierbar ist; und
einen vom Benutzer navigierbaren Cursor (504);
Empfangen einer Benutzeranfrage zum Bewegen des vom Benutzer navigierbaren Cursors an eine erste neue Cursorposition im visuellen Tastenfeld; und
Positionieren des Funktionsfensters in einer Position der Mehrzahl von Positionen, die der ersten neuen Cursorposition am nächsten ist, als Reaktion auf das Empfangen der Benutzeranfrage.

2. Verfahren nach Anspruch 1, wobei das Positionieren des Funktionsfensters in der Position der Mehrzahl von Positionen, die der ersten neuen Cursorposition am nächsten ist, das Verschieben zumindest einiger der Mehrzahl von ersten vom Benutzer auswählbaren Schaltflächen an neue Orte im visuellen Tastenfeld umfasst.

3. Verfahren nach Anspruch 1, des Weiteren umfassend:
Empfangen einer Benutzerauswahl von einer der Mehrzahl von ersten vom Benutzer auswählbaren Schaltflächen; und
Erstellen einer Liste oder eines Baums von Kandidaten-Zeichenfolgen als Reaktion auf das Empfangen der Benutzerauswahl.

4. Verfahren nach Anspruch 3, des Weiteren umfassend, als Reaktion auf das Empfangen der Benutzerauswahl, das visuelle Unterscheiden von zumindest einer Schaltfläche der Mehrzahl von ersten vom Benutzer auswählbaren Schaltflächen, wobei die zumindest eine visuell unterschiedene Schaltfläche zumindest teilweise auf der Liste oder dem Baum von Kandidaten-Zeichenfolgen basiert.

5. Verfahren nach Anspruch 3, des Weiteren umfassend, als Reaktion auf das Empfangen der Benutzerauswahl, das Entfernen von zumindest einer Schaltfläche der Mehrzahl von ersten vom Benutzer auswählbaren Schaltflächen, wobei die zumindest eine entfernte Schaltfläche zumindest teilweise auf der Liste oder dem Baum von Kandidaten-Zeichenfolgen basiert.

6. System zum Unterstützen einer Benutzereingabe in einer Medienführungsanwendung, die zumindest teilweise auf einer Benutzerausstattung (300) implementiert ist, umfassend:
eine Benutzereingabeoberfläche (310);
eine Anzeigevorrichtung (312); und
Steuerschaltkreise, die für Folgendes konfiguriert sind:
Generieren eines visuellen Tastenfelds (500) für die Anzeige auf der Anzeigevorrichtung, umfassend:
eine Mehrzahl von ersten vom Benutzer auswählbaren Schaltflächen, wobei die Mehrzahl von ersten vom Benutzer auswählbaren Schaltflächen zumindest einigen Buchstaben des Alphabets entspricht;
ein Funktionsfenster (502), das zumindest eine zweite vom Benutzer auswählbare Schaltfläche umfasst, wobei die zumindest eine zweite vom Benutzer auswählbare Schaltfläche einer Funktion im Zusammenhang mit der Benutzereingabe entspricht, wobei das Funktionsfenster in einer Mehrzahl von Positionen in Bezug zu der Mehrzahl von ersten vom Benutzer auswählbaren Schaltflächen positionierbar ist; und
einen vom Benutzer navigierbaren Cursor (504);
Empfangen einer Benutzeranfrage von der Benutzereingabeoberfläche zum Bewegen des vom Benutzer navigierbaren Cursors an eine erste neue Cursorposition im visuellen Tastenfeld; und
Positionieren des Funktionsfensters in einer Position der Mehrzahl von Positionen, die der ersten neuen Cursorposition am nächsten ist, als Reaktion auf das Empfangen der Benutzeranfrage.

7. System nach Anspruch 6, wobei die Steuerschaltkreise derart konfiguriert sind, dass das Positionieren des Funktionsfensters in der Position der Mehrzahl von Positionen, die der ersten neuen Cursorposition am nächsten ist, das Verschieben zumindest einiger der Mehrzahl von ersten vom Benutzer auswählbaren Schaltflächen an neue Orte im visuellen Tastenfeld umfasst.

8. System nach Anspruch 6, wobei die Steuerschaltkreise des Weiteren für Folgendes konfiguriert sind:
Empfangen einer Benutzerauswahl von einer der Mehrzahl von ersten vom Benutzer auswählbaren Schaltflächen; und
Erstellen einer Liste oder eines Baums von Kandidaten-Zeichenfolgen als Reaktion auf das Empfangen der Benutzerauswahl.

9. System nach Anspruch 6, wobei die Steuerschaltkreise des Weiteren konfiguriert sind, als Reaktion auf das Empfangen der Benutzerauswahl, für das visuelle Unterscheiden von zumindest einer Schaltfläche der Mehrzahl von ersten vom Benutzer auswählbaren Schaltflächen, wobei die zumindest eine visuell unterschiedene Schaltfläche zumindest teilweise auf der Liste oder dem Baum von Kandidaten-Zeichenfolgen basiert.

10. System nach Anspruch 6, wobei die Steuerschaltkreise des Weiteren konfiguriert sind, als Reaktion auf das Empfangen der Benutzerauswahl, für das Entfernen von zumindest einer Schaltfläche der Mehrzahl von ersten vom Benutzer auswählbaren Schaltflächen, wobei die zumindest eine entfernte Schaltfläche zumindest teilweise auf der Liste oder dem Baum von Kandidaten-Zeichenfolgen basiert.

## Revendications

1. Procédé pour supporter une entrée utilisateur dans une application de guidage multimédia implémentée au moins partiellement sur un équipement utilisateur (300), comprenant :
la génération, pour l'affichage, d'un clavier visuel (500) comprenant :
une pluralité de premiers boutons sélectionnables par utilisateur, la pluralité de premiers boutons sélectionnables par utilisateur correspondant à au moins certaines des lettres de l'alphabet ;
un volet de fonction (502) comprenant au moins un second bouton sélectionnable par utilisateur, l'au moins un second bouton sélectionnable par utilisateur correspondant à une fonction connexe à l'entrée utilisateur, le volet de fonction étant positionnable dans une pluralité de positions par rapport à la pluralité de premiers boutons sélectionnables par utilisateur ; et
un curseur navigable par utilisateur (504) ;
la réception d'une demande utilisateur pour déplacer le curseur navigable par utilisateur jusqu'à une première nouvelle position de curseur à l'intérieur du clavier visuel ; et
en réponse à la réception de la demande utilisateur, le positionnement du volet de fonction dans une position parmi la pluralité de positions qui est la plus près de la première nouvelle position de curseur.

2. Procédé selon la revendication 1, dans lequel le positionnement du volet de fonction dans la position parmi la pluralité de positions qui est la plus près de la première nouvelle position de curseur comprend le déplacement d'au moins certains parmi la pluralité de premiers boutons sélectionnables par utilisateur jusqu'à de nouveaux emplacements dans le clavier visuel.

3. Procédé selon la revendication 1 comprenant en outre :
la réception d'une sélection utilisateur d'un parmi la pluralité de premiers boutons sélectionnables par utilisateur ; et
en réponse à la réception de la sélection utilisateur, la construction d'une liste ou d'un arbre de chaînes candidates.

4. Procédé selon la revendication 3, comprenant en outre, en réponse à la réception de la sélection utilisateur, la distinction visuelle d'au moins un bouton parmi la pluralité de premiers boutons sélectionnables par utilisateur, l'au moins un bouton visuellement distingué étant fondé, au moins en partie, sur la liste ou l'arbre de chaînes candidates.

5. Procédé selon la revendication 3 comprenant en outre, en réponse à la réception de la sélection utilisateur, l'enlèvement d'au moins un bouton parmi la pluralité de premiers boutons sélectionnables par utilisateur, l'au moins un bouton enlevé étant fondé, au moins en partie, sur la liste ou l'arbre de chaînes candidates.

6. Système pour supporter entrée utilisateur dans une application de guidage multimédia implémentée au moins partiellement sur équipement utilisateur (300), comprenant :
une interface d'entrée utilisateur (310) ;
un dispositif d'affichage (312) ; et
une circuiterie de commande configurée pour :
générer pour l'affichage, sur le dispositif d'affichage, un clavier visuel (500) comprenant :
une pluralité de premiers boutons sélectionnables par utilisateur, la pluralité de premiers boutons sélectionnables par utilisateur correspondant à au moins certaines des lettres de l'alphabet ;
un volet de fonction (502) comprenant au moins un second bouton sélectionnable par utilisateur, l'au moins un second bouton sélectionnable par utilisateur correspondant à une fonction connexe à l'entrée utilisateur, le volet de fonction étant positionnable dans une pluralité de positions par rapport à la pluralité de premiers boutons sélectionnables par utilisateur ; et
un curseur navigable par utilisateur (504) ;
recevoir, à partir de l'interface d'entrée utilisateur, une demande utilisateur pour déplacer le curseur navigable par utilisateur jusqu'à une première nouvelle position de curseur à l'intérieur du clavier visuel ; et
en réponse à la réception de la demande utilisateur, positionner le volet de fonction dans une position parmi la pluralité de positions qui est la plus près de la première nouvelle position de curseur.

7. Système selon la revendication 6, dans lequel la circuiterie de commande est configurée de sorte que le positionnement du volet de fonction dans la position parmi la pluralité de positions qui est la plus près de la première nouvelle position de curseur comprenne le déplacement d'au moins certains parmi la pluralité de premiers boutons sélectionnables par utilisateur jusqu'à de nouveaux emplacements dans le clavier visuel.

8. Système selon la revendication 6, dans lequel la circuiterie de commande est en outre configurée pour :
recevoir une sélection utilisateur d'un parmi la pluralité de premiers boutons sélectionnables par utilisateur ; et
en réponse à la réception de la sélection utilisateur, construire une liste ou un arbre de chaînes candidates.

9. Système selon la revendication 6 dans lequel la circuiterie de commande est en outre configurée pour, en réponse à la réception de la sélection utilisateur, distinguer visuellement au moins un bouton parmi la pluralité de premiers boutons sélectionnables par utilisateur, l'au moins un bouton visuellement distingué étant fondé, au moins en partie, sur la liste ou l'arbre de chaînes candidates.

10. Système selon la revendication 6, dans lequel la circuiterie de commande est configurée pour, en réponse à la réception de la sélection utilisateur, enlever au moins un bouton parmi la pluralité de premiers boutons sélectionnables par utilisateur, l'au moins un bouton enlevé étant fondé, au moins en partie, sur la liste ou l'arbre de chaînes candidates.
